(19) Europäisches Patentamt
European Patent Office
Office européen des brevets

(11) Veröffentlichungsnummer: **0 315 201 B1**

## (12) EUROPÄISCHE PATENTSCHRIFT

(45) Veröffentlichungstag der Patentschrift: **30.08.95**

(51) Int. Cl.⁶: **G01N 9/36**, G01F 23/00

(21) Anmeldenummer: **88118435.2**

(22) Anmeldetag: **04.11.88**

(54) **Verfahren und Vorrichtung zur Durchführung von Messungen an einer schäumenden Flüssigkeit.**

(30) Priorität: **05.11.87 DE 3737607**

(43) Veröffentlichungstag der Anmeldung:
**10.05.89 Patentblatt 89/19**

(45) Bekanntmachung des Hinweises auf die
Patenterteilung:
**30.08.95 Patentblatt 95/35**

(84) Benannte Vertragsstaaten:
**AT BE CH DE ES FR GB IT LI NL SE**

(56) Entgegenhaltungen:
**EP-A- 0 057 816**
**DE-A- 3 005 489**
**GB-A- 2 015 861**
**US-A- 3 933 030**

**CHEMICAL ENGINEERING, Band 91, Nr. 20,
Oktober 1984, Seiten 71-78, New York, US ;
C.H, HOEPPLER : "Online measurement of
liquid density"**

(73) Patentinhaber: **Biomelktechnik Hoefelmayr &
Co.
Steinwichslenstrasse 20
CH-9052 Niederteufen (CH)**

(72) Erfinder: **Hoefelmayr, Tilman, Dr.
Steinwichslenstrasse 20
CH-9052 Niederteufen AR (CH)**
Erfinder: **Schulz, Dieter
Birkenstrasse 13
D-8311 Eching-Viecht (DE)**

(74) Vertreter: **Patentanwälte Grünecker, Kinkeldey, Stockmair & Partner
Maximilianstrasse 58
D-80538 München (DE)**

**Beschreibung**

Die Erfindung betrifft ein Verfahren zur Durchführung von Messungen an mit Gas versetzten schäumenden Flüssigkeiten, bei dem an der in einem Gefäß enthaltenen schäumenden Flüssigkeit in mehreren unterschiedlichen Höhenniveaus jeweils ein durch einen von dem Gasanteil bestimmter Parameter der Flüssigkeit abhängigen Meßwert ($I_m$) gemessen wird. Die Erfindung betrifft auch eine Vorrichtung zur Durchführung von Messungen an mit Gas versetzten schäumenden Flüssigkeiten, insbesondere an Milch/Luft-Gemischen, mit einem Gefäß sowie wenigstens einer Meßvorrichtung, mit der bzw. denen in mehreren unterschiedlichen Höhenniveaus des Gefäßes jeweils ein durch einen von dem Gas abhängigen Parameter der in dem Gefäß enthaltenen Flüssigkeit bestimmter Meßwert ($I_m$) meßbar ist. Die Erfindung findet besondere Anwendung bei der Bestimmung der spezifischen Dichte in Abhängigkeit von der Höhe, der Messung der Masse, bzw. des Flusses von schäumenden Flüssigkeiten und insbesondere von Milch.

Beim Messen von Milchmengen auf dem Bauernhof oder in der Molkerei interessiert die Masse der Milch. Deshalb wäre an sich das Wiegen der Milch die richtige Methode, um die Masse genau zu bestimmen. Eine genaue Wägung der Milch ist im rauhen Alltagseinsatz in den Stallungen auf einem Bauernhof jedoch technisch sehr schwierig, insbesondere, wenn nur kleine, womöglich mobile Milchmengenmeßvorrichtungen eingesetzt werden sollten.

Bei derartigen Wägevorrichtungen würden die Krafteinflüsse durch die angeschlossenen Zu- und Ablaufschläuche, die kinetische Energie der pulsierend abgemolkenen Milch, Erschütterungen durch unachtsames Hantieren, eine nicht horizontale Meßbasis, Reinigungsprobleme bei internen Meßkammern mit den notwendigen Druckausgleichsleitungen usw. erhebliche Probleme und auch Meßfehler mit sich bringen. Es ist deshalb nicht verwunderlich, daß wiegende Milchmengenmeßsysteme sich außerhalb von Forschungsinstituten nicht in der bäuerlichen Alltagspraxis durchsetzen konnten.

Praktisch alle zur Zeit bekannten Milchmengenmeßgeräte für die Praxis versuchen die Masse der ermolkenen Milch mit Hilfe einer Volumenmessung zu ermitteln. Hier sind Geräte bekannt geworden, die zum Beispiel am Melkstand fest installierte Milchmengenmeßgefäße umfassen, oder Geräte, bei denen jeweils ein Teil des Milchflusses abgezweigt und gemessen wird. Es sind bereits auch sogenannte Durchflußmengenmesser bekannt geworden, die entweder intermitierend chargenweise arbeiten oder eine kontinuierliche Mengenmessung vornehmen.

Ein Beispiel der ersten Messungsart ist aus der DE-OS 30 05 489 bekannt geworden, bei dem die ermolkene Milch in ein großes Standgefäß geleitet wird. In dem Standgefäß ist eine Meßsonde angeordnet, die in gleichen Höhenabständen übereinander mehrere Meßelektroden aufweist, die mit einer gemeinsamen festen Gegenelektrode zusammenarbeiten. Bei diesem Meßverfahren wird die Eigenschaft der Milch, daß sie eine verhältnismäßig große Leitfähigkeit gegenüber dem Isolator Luft aufweist ausgenutzt, um durch zyklisches Anlegen eines elektrischen Feldes an die verschiedenen Elektroden festzustellen, welche Elektrodenkreise aufgrund des Pegelstandes der Milch bereits geschlossen sind. Man fragt somit jeden Elektrodenkreis auf eine Ja/Nein-Entscheidung ab, in dem Sinne, daß die unterhalb des Milchpegels liegenden Elektrodenkreise die Information Ja-geschlossen geben, während die über dem Milchpegel liegenden Elektrodenkreise die Information Nein-nicht geschlossen anzeigen.

Durch die US-PS 35 30 711 ist auch auf einem völlig anderen Gebiet, nämlich dem Gebiet der Erdölbohrungen, ein Verfahren zur Bestimmung der Anteile von drei verschiedenen Fluiden, nämlich Wasser, Erdöl und Gas bekannt geworden. In einem Meßrohr, in dem sich die genommene Probe absetzen kann, wodurch sich aufgrund der unterschiedlichen Dichte drei getrennte Schichten und damit zwei Grenzschichten ergeben, sind in der Höhe gegeneinander versetzt angeordnete Elektroden mit einer gemeinsamen Gegenelektrode vorgesehen. Die Elektroden werden zyklisch mit einer Wechselspannung abgefragt und es wird jeweils die Kapazität gemessen. Aufgrund der unterschiedlichen Dielektrizitätskonstanten von Wasser, Erdöl und Gas läßt sich somit an den Grenzschichten aufgrund eines Sprunges in der Größe der gemessenen Kapazität die Lage der betreffenden Grenzschichten und damit die Größe des jeweiligen Volumens bestimmen.

Aus der US-PS 33 70 466 ist auch bereits ein Verfahren zur Mengenbestimmung zweier übereinander geschichteter, galvanischer Flüssigkeiten (Flüssige Metalle) mit unterschiedlicher Leitfähigkeit bekannt geworden. In einem Meßgefäß sind in jeweils gleichem Höhenabstand voneinander mehrere Elektrodenpaare angeordnet, an die zyklisch eine Gleichspannung angelegt wird. Zwischen den aufeinanderfolgenden Elektrodenpaaren, zwischen denen ein Sprung in der eletkrischen Leitfähigkeit festgestellt wird, liegt die zu bestimmende Flüssigkeitsgrenze.

Aus der US-PS 44 50 722 ist auch bereits ein Meßsystem zur Messung der Flüssigkeitshöhe in einem Zylinder bekannt geworden, bei dem auf einander gegenüberliegenden Seiten des lichtdurchlässigen Meßzylinders jeweils in gleichen Höhenabständen übereinander Rot-Grünlichtquellen sowie Rot-Grünlichtsensoren angeordnet sind. Auf solchen Meßstrecken, die unterhalb des Wasserpegels liegen, wird der Rotanteil des Lichtes absorbiert, so daß lediglich die Grünsensoren ansprechen und ein grünes Signal erzeugen. Bei solchen Meßstrecken, die oberhalb des Wasserpegels liegen, wird dagegen sowohl ein grünes wie ein rotes Signal erzeugt. Das Auftreten bzw. Verschwinden es roten Signales zeigt somit an, daß zwischen diesen Höhenniveaus der Wasserspiegel liegen muß.

Aus den DE-OS 16 07 007 und 16 32 938 sind auch bereits Vorrichtungen zur Milchmengenmessung bekannt geworden, bei denen jeweils die ermolkene Milch in einem Strahl senkrecht von unten gegen einen konkaven Prallschirm gespritzt wird, so daß sich ein über 360° reichender Milchflüssigkeitsschirm ergibt. Die über einen bestimmten Winkelbereich dieses Schirms abfließende Milch wird aufgefangen und einem Meßzylinder zugeführt. Die Höhe des Milchstandes in dem Meßzylinder wird mit dem Auge abgelesen und stellt praktisch den Anteil der Gesamtmilchmenge dar, der dem Verhältnis von dem Winkelbereich, auf dem Milch abgefangen wird, zu 360° entspricht.

Aus der GB-PS 1 316 573, der DE-AS 28 10 376 sowie der EP 0 057 267 sind auch bereits Milchmengenmeßgeräte bekannt geworden, die intermitierend chargenweise messen.

Dabei wird die abgemolkene Milch solange in ein Meßgefäß eingeführt, bis ein auf der Milch schwimmender Schwimmer oder ein in einer vorbestimmten Höhe liegender Sensor aufgrund des diesen Sensor erreichenden Milchpegels ein Signal abgibt. Sodann wird die Zufuhr von weiterer Milch unterbrochen, während gleichzeitig ein Abflußventil an dem Meßgefäß geöffnet wird, aus dem sodann etwa die ganze Milch oder die Milch solange ausfließen kann, bis ein in einem niedrigeren Niveau liegender Sensor ein weiteres Signal abgibt, worauf das Milchabflaußventil wieder geschlossen wird und gleichzeitig wieder der Zutritt von abgemolkener und in der Zwischenzeit aufgestauter Milch in das Meßgefäß freigegeben wird. Da das Volumen zwischen dem auf dem oberen Höhenniveau liegenden Sensor bzw. dem auf dem unteren Höhenniveau liegenden zweiten Sensor bekannt ist, kann somit durch Aufsummieren der einzelnen Chargen unter der Annahme, daß die Milch eine konstante spezifische Dichte hat, die Gesamtmilchmenge bestimmt werden.

Aus der DE-OS 32 10 465 ist auch bereits ein Milchflußmesser bekannt, bei dem die ermolkene Milch in ein Staugefäß eingeführt wird, das an seinem unteren Ende einen Abfluß mit einem vorbestimmten Querschnitt aufweist. Bei dieser Anordnung soll mit Hilfe von an den Behälterinnenwandungen des Staugefäßes angeordneten Elektroden kapazitiv die Stauhöhe der Milch erfaßt werden, um in Verbindung mit dem Querschnitt der Abflußleitung den jeweiligen Milchfluß der abfließenden Milch zu bestimmen.

Eine ähnliche Vorrichtung eines Milchflußmessers ist auch bereits aus der US-PS 4 452 176 bekannt, bei der die ermolkene Milch ebenfalls in ein Staugefäß fließt, aus dem sie über einen senkrechten Meßschlitz abfließt. Auch hier soll die Stauhöhe zur Bestimmung des Milchflusses aus einer Kapazitätsmessung bestimmt werden. Ein beiden Vorrichtungen gemeinsames Problem liegt darin, daß aufgrund der Vermischung der Milch mit Luft mit Hilfe einer kapazitiven Messung nicht eindeuting die Stauhöhe bestimmt werden kann und andererseits auch nicht die über den Abflußquerschnitt abgeflossene Milch, da sich die spezifische Dichte der abfließenden Milch in weiten Grenzen ändert.

Das Problem der Milchmengenmessung, das bisher in unzureichendem Maße berücksichtigt wurde, besteht darin, daß Milch ein stark schäumendes Fluid ist, so daß bei den Volumenmeßverfahren die Messung durch den Schaum bzw. den Luftanteil verfälscht wird, so daß nicht mehr eindeutig von dem Volumen auf die Masse geschlossen werden kann, wie dies zum Beispiel bei Wasser weitestgehend möglich ist.

Zunächst sind in der Milch Milchgase, insbesondere Kohlensäure und Stickstoff gebunden, die etwa zwischen drei und neun Volumenprozent schwanken. Der noch weitaus größere Gasanteil ist jedoch durch die Luftbeimischung, insbesondere beim Melkvorgang, bedingt. In der Melkmaschine wird zum Transport der Milch durch einen Lufteinlaß im Melkzeug ein Luft-Milchgemisch erzeugt, das je nach Melkbedingungen etwa zwischen 30 und 1 Volumenprozent Milch enthält. Um die Luft aus der Milch abzuscheiden, benötigt man eine Entgasungsstrecke oder ein Entgasungsgefäß mit geringer Turbulenz und ausreichender Oberfläche. Während große Gasblasen, etwa mit einem Durchmesser von 3 mm, relativ schnell aufsteigen, mit ca. einer Endgeschwindigkeit von 300 mm/s, benötigen kleine Blasen, beispielsweise mit einem Durchmesser von 0,3 mm, etwa zehnmal länger. Das Meßproblem bei der Volumenmessung von Milch wird also hauptsächlich durch die kleinen Milchblasen bedingt, die etwa 10 bis 15% des Milchvolumens ausmachen.

Diese kleinen Blasen lassen sich mit mechanischen Trennmitteln, wie Einlaufzyklon, Füllen der Meßkammer von unten usw. nicht befriedigend aus der Milch entfernen, insbesondere nicht in kleinen, für den mobilen Einsatz auf dem Bauernhof tauglichen Milchmengenmeßgeräten mit entsprechend kurzen Milch-Verweilzeiten.

Der Luftanteil und die Blasengröße sind aber nicht immer gleich, sondern von einer Vielzahl von Faktoren abhängig, die eine unterschiedliche Schaumbildung verursachen. Solche Faktoren sind etwa die

3

Milchdurchflußmenge, die Milchschlauchführung, die Art des Melkzeuges, der Zitzengummityp, der Melkschlauchdurchmesser, der Melkanlagentyp, die Fütterung der Kühe, die die Milchzusammensetzung verändert, die Eutergesundheit, Unterschiede zwischen den einzelnen Kühen, und Unterschiede bei jeder einzelnen Kuh aufgrund des Laktationsstadiums.

Aufgrund dieser Gegebenheiten ist es praktisch unmöglich etwa in einem Milchgefäß eine Höhe zu schätzen, von der man annimmt, daß das Volumen unter dieser Höhe aus reiner Milch besteht, während der über dieser Höhe liegende Schaum als keinen wesentlichen Milchanteil mehr enthaltend vernachläßigt wird. D.h. der Versuch, den Schaumanteil durch eine entsprechende allgemeine Kalibierung bzw. Eichung der Pegelstandsmessung in den Griff zu bekommen, ist zum Scheitern verurteilt, insbesondere bei kleinen Gefäßen, wie sie vor allem für mobile Milchmengenmesser nötig sind. Bei solchen Gefäßgrößen beträgt der Luftanteil des angestauten Fluides nicht selten 30 Volumenprozent und mehr. Und selbst in großvolumigen Milchmengenmeßgeräten, sogenannten Rekordern, kann die Schaumkrone je nach Schaumhöhe und Schaumkonsistenz zwischen 0 und 0,5 kg enthalten, was bei einer typischen Milchleistung von zum Beispiel 10 kg pro Gemelk ca. 5% ausmachen kann. Rekorder werden überlicherweise an der Grenzschicht Milch/Schaum abgelesen, d.h. man bewertet die im Schaum steckende Milchmenge nicht, weil man die Schaumkonsistenz nicht kennt.

Aus der DE-OS 27 20 006 ist bereits eine Vorrichtung zur Überwachung bzw. Messung des Schaumpegels in einer Schwimmaufbereitungsanlage bekannt geworden. Bei dieser Anordnung sind mehrere Elektrodenstäbe vorgesehen, die in senkrechter Anordnung parallel zueinander angeordnet sind und mit ihrem unteren Ende verschieden weit gegen die Flüssigkeitsoberfläche vorstehen. Sobald der Schaum bei einem Ansteigen des Schaum mit einer Elektrode in Berührung kommt, wird aufgrund der Leitfähigkeit des Schaums ein elektrischer Kreis geschlossen. Durch die Zahl der geschlossenen Schaltkreise der einzelnen Elektroden wird somit die Höhe des Schaumes insgesamt angezeigt. Die Höhenanzeige erfolgt auch hier somit aufgrund einer Ja/Nein-Angabe der einzelnen Elektrodenschaltkreise.

Im Vorstehenden wurde jeweils auf Milch als schäumende Flüssigkeit bezug genommen. Dieselben Probleme wie bei der Milch bestehen aber bei allen anderen schäumenden Flüssigkeiten, wie insbesondere Bier oder Fruchtsäften oder anderen technischen schäumenden Flüssigkeiten, wie etwa Galvanisierflüssigkeiten.

Der vorliegenden Erfindung liegt nunmehr die Aufgabe zugrunde, Verfahren und Vorrichtungen zur vereinfachten Messung von Größen schäumender Flüssigkeit anzugeben.

Dies wird ausgehend von einem Meßverfahren der eingangs erwähnten Art gemäß einer ersten Lösung erfindungsgemäß dadurch erreicht, daß zur Messung der spezifischen Dichte der schäumenden Flüssigkeit in Abhängigkeit von der Höhe auf den verschiedenen Höhenniveaus (m) auf einer im wesentlichen entgaste Flüssigkeit der zu messenden schäumenden Flüssigkeit enthaltenden Bezugsmeßstrecke ein Bezugsmeßwert ($I_0$) des gleichen Parameters gemessen wird, daß in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert ($I_0$) und dem Meßwert ($I_m$) auf diesem Höhenniveau oder dem Kehrwert dieses Verhältnisses gebildet wird, so daß die Verhältniszahl ($c'_m$) für entgaste Flüssigkeit gleich 1 und für Luft im wesentlichen gleich Null ist, und daß jede Verhältniszahl ($c'_m$) mit dem Wert für die spezifische Dichte ($\rho$) der entgasten Flüssigkeit multipliziert wird.

Das erfindungsgemäße Verfahren ermöglicht in einfacher Weise, die spezifische Dichte einer schäumenden Flüssigkeit in jeder Höhe festzustellen und schafft die Voraussetzung, die Masse einer schäumenden Flüssigkeit aufgrund einer Volumenmessung zu bestimmen, indem man in der Lage ist, den Anteil an der betreffenden Flüssigkeit in jeder Höhe des Flüssigkeits-/Luftgemisches zu bestimmen. Es kann erreicht werden, daß durch geeignete Wahl der Parameter der Meßvorrichtung die gemessenen Verhältniszahlen $c'_m$ gleich den gewünschten Faktoren sind, die durch Multiplikation mit $\rho$ die spezifische Dichte auf dem betreffenden Höhenniveau angeben. Gegebenenfalls muß einmal eine Eichung nach einem weiter unten angegebenen Verfahren durchgeführt werden, um somit über ein Korrektur korrigierte Verhältniszahlen $c'_m$ zu erhalten.

Ausgehend von einem Meßverfahren der eingangs erwähnten Art, wird gemäß einer zweiten Lösung erfindungsgemäß vorgesehen, daß auf den verschiedenen Höhenniveaus (m) auf einer im wesentlichen entgaste Flüssigkeit der zu messenden schäumenden Flüssigkeit enthaltenden Bezugsmeßstrecke ein Bezugsmeßwert ($I_0$) des gleichen Parameters gemessen wird, daß in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert ($I_0$) und dem Meßwert ($I_m$) auf diesem Höhenniveau oder dem Kehrwert dieses Verhältnisses gebildet wird, so daß die Verhältniszahl ($c'_m$) für die entgaste Flüssigkeit gleich 1 und für Luft im wesentlichen gleich Null ist, daß jeweils das zwischen einem Höhenniveau und dem nächst unteren Höhenniveau bzw. dem Boden des Gefäßes liegende Volumen $(V_m)$ bestimmt wird, daß jeweils das Produkt $(c'_m \times \rho \times V_m)$ aus dem unterhalb eines Höhenniveaus liegenden Volumen $(V_m)$, der für dieses Höhenniveau bestimmten Verhältniszahl $(c'_m)$ und der spezifischen Dichte der Milch $(\rho)$ gebildet wird, und daß zur Bestimmung der gesamten Flüssigkeitsmasse (G) die Summe aller so gebildeter Produkte über alle Höhenniveaus (n) gebildet wird entsprechend

$$G = \sum_{m=1}^{n} c'_m \times V_m \times \rho \quad .$$

Hierbei wird somit ein Verfahren geschaffen, bei dem das gesamte Meßvolumen in Schichten unterteilt wird und bei dem für jede Schicht durch Messung der Verhältniszahl eine spezifische Dichte des Milch/Luftgemisches bestimmt wird, die das gerade vorliegende Milch/Luftverhältnis wiedergibt. Damit kann zum erstenmal auch bei einer Volumenmessung die in dem Schaum enthaltene Milchmasse erfaßt und bei der Bestimmung der Gesamtmilchmasse berücksichtigt werden.

Ausgehend von der obigen Gleichung für die Gesamtmasse G wird ohne weiteres deutlich, daß unter bestimmten Voraussetzungen die Bildung und Verarbeitung der einzelnen Meßwerte auch auf andere Weise vorgenommen werden kann, etwa um die notwendige Zeit für jede Gesamtmessung herabzusetzen. Geht man etwa von der Voraussetzung aus, daß das Volumen $V_m$ auf jedem Höhenniveau konstant $= V_0$ ist und daß jede geeichte Verhältniszahl $c'_m$ dargestellt wird durch

$$\frac{I'_m}{I'_0} \quad ,$$

worin $I'_m$ den geeichten Meßwert für das Höhenniveau m und $I'_0$ den geeichten Bezugswert bedeutet, dann läßt sich die obige Gleichung vereinfachen zu

$$G = \frac{V_0 \cdot \rho}{I'_0} \cdot \sum_{m=1}^{n} \cdot I'_m = \frac{n \cdot V_0 \cdot \rho}{I'_0} \cdot \frac{1}{n} \cdot \sum_{m=1}^{n} \cdot I'_m$$

Da

$$\frac{V_0 \cdot \rho}{I'_0}$$

konstant ist, würde sich die Messung auf eine Summation der geeichten Meßwerte $I'_m$ und eine Multiplikation mit dem Faktor

$$\frac{V_0 \cdot G}{I'_0}$$

reduzieren.

Bedenkt man andererseits, daß $n \cdot V_0$ das Gesamtvolumen $V$ über alle Höhenniveaus ist, und daß

$$\frac{I'_1 + I'_2 + \ldots I'_n}{n \cdot I'_0}$$

als eine über $n$ gemittelte, geeichte Verhältniszahl $\bar{c}'$ angesehen werden kann, so kann die Masse $G$ auch bestimmt werden aus

$$G = V \cdot \rho \cdot \bar{c}'.$$

Es ist einleuchtend, daß auch in diesem Fall nicht jeweils zunächst das Verhältnis

$$\frac{I'_m}{I'_0} \quad (m=1, \ldots, n)$$

gebildet werden muß, sondern daß zunächst die Summe

$$\sum_{m=1}^{n} I'_m$$

gebildet werden kann.

Um die Messung, wie oben beschrieben, durch Wahl eines gleichen Volumens $V_0$ auf jedem Höhenniveau vereinfachen zu können, wird vorzugsweise ein zylindrisches Gefäß mit beliebiger Grundfläche verwendet und die Höhenniveaus werden in gleichen gegenseitigen Höhenabständen vorgesehen. Selbstverständlich könnten aber auch gleiche Volumina $V_0$ bei unregelmäßigen Gefäßquerschnitten erreicht werden, wenn die Elektroden in entsprechenden unterschiedlichen Höhenabständen angeordnet werden, die an die Querschnittsform angepaßt sind.

Ausgehend von einem Meßverfahren der eingangs erwähnten Art wird gemäß einer dritte Lösung vorgesehen, daß in der schäumenden Flüssigkeit auf den verschiedenen Höhenniveaus (m) auf einer im wesentlichen entgaste Flüssigkeit der zu messenden schäumenden Flüssigkeit enthaltenden Bezugsmeßstrecke ein Bezugsmeßwert $(I_0)$ des gleichen Parameters gemessen wird, daß in Abhängigkeit davon, ob ein in Luft gemessener entsprechender Meßwert $(I_L)$ größer oder kleiner als der auf der Bezugsmeßstrecke erhaltene Bezugsmeßwert $(I_0)$ ist, für jedes Höhenniveau eine Verhältniszahl $(c'_m)$ entsprechend dem Verhältnis aus dem Bezugsmeßwert $(I_0)$ und dem Meßwert $(I_m)$ auf diesem Höhenniveau oder dem Kehrwert dieses Verhältnisses gebildet wird, so daß die Verhältniszahl $(c'_m)$ für die entgaste Flüssigkeit gleich 1 und für Luft im wesentlichen gleich Null ist, daß die Höhenniveaus jeweils einen gleichen Abstand (d) voneinander aufweisen, daß dem Gefäß Flüssigkeit zugeführt wird, daß kontinuierlich Flüssigkeit über einen im wesentlichen senkrechten Schlitz abfließt, und daß die durch den Meßschlitz pro Zeit abfließende Flüssigkeitsmasse bestimmt wird aus der Gleichung

$$\dot{m}_{eff} = \left[ K \cdot \sum_{m=1}^{n} \left| \overline{\sqrt{c'_m \cdot \sum_{i=m}^{n} c'_i}} \right. \right] \left[ 1 - a \left| \overline{\sqrt{K \sum_{m=1}^{n} \left| \sqrt{c'_m \sum_{i=m}^{n} c'_i}} \right.} \right],$$

worin bedeuten:

$$\dot{m}_{eff} \left[ \frac{g}{sec} \right] =$$

gesamter aus dem Schlitz austretender Massenstrom

$K = d \times s \times \rho \sqrt{2gd}$

$d$ [cm] = Höhenniveauabstand

$$g \left[ \frac{cm}{sec^2} \right] = 981 \; \frac{cm}{sec^2}$$

$S$ [cm] = Schlitzbreite

$$\rho \left[ \frac{g}{cm^3} \right] =$$

spezifisch Dichte der Flüssigkeit

$n$ = Gesamtzahl der Höhenniveaus

$c'_m$ = Verhältniszahl zwischen 1 und 0 auf dem Höhenniveau m

$a$ = von Schlitzbreite, Schlitzkante etc. abhängige, durch Eichung ermittelte Konstante der Meßvorrichtung.

Das Verfahren ist gleichfalls anwendbar, um durch eine nachträgliche Summation oder Intergration aller gemessenen Flüße die Gesamtmasse der geflossenen Flüssigkeit zu bestimmen.

Die Formel ergibt sich durch Ableitung aus der sogenannten Bernouilli'schen Gleichung, indem unter Zugrundelegung eines senkrechten Schlitzes für jede Höhe des

Schlitzes die sich aufgrund des hyorostatischen Druckes in einem Höhenniveau ergebende Ausflußgeschwindigkeit des Flüssigkeits-/Luftgemisches berechnet wird und eine übliche Korrektur für das Ausfließverhalten eines Fluides an einem Spalt in Abhängigkeit von der Geschwindigkeit berücksichtigt wird, wobei sich der hydrostatische Druck auf einem bestimmten Höhenniveau aus dem gemessenen Schaumprofil errechnen läßt und die spezifische Dichte auf diesem Höhenniveau gleichfalls durch Messung bestimmt wird. Selbstverständlich stellt das Ausfließen an einem senkrechten Schlitz lediglich einen Spezialfall dar, durch den der erfinderische Gedanke nicht beschränkt sein soll. Ebensogut läßt sich beispielsweise nunmehr auch durch einfache Berechnung der Fluß einer schäumenden Flüssigkeit berechnen, der etwa durch eine am Boden des Gefäßes vorgesehene Öffnung abfließt, nachdem durch Messungen des jeweiligen Flüssigkeitsanteils in den verschiedenen Höhen der hydrostatische Druck dieser Flüssigkeit an dem Strömungsauslaß bestimmt werden kann.

Die Bezugsmessung sollte in der gleichen Milch durchgeführt werden, die auch bei der tatsächlichen Messung anfällt, um bereits zu vermeiden, daß sich aufgrund anderer Milchkonsistenz usw. Unterschiede ergeben. Diese Bezugsmessung kann außerhalb des eigentlichen Milchgefäßes durchgeführt werden und es sollte lediglich sichergestellt sein, daß die Milch weitestgehend entlüftet ist, d.h, möglichst keine Luftblasen mehr enthält. Da jedoch eine Bezugsmeßstrecke außerhalb des Milchmeßgefäßes die Messung insgesamt wieder erschwert, wird die Bezugsmessung bevorzugt am Boden des Milchgefäßes selbst ausgeführt. Hierbei wird von der Erfahrung ausgegangen, daß bei den hier in Frage stehenden Messungen sich die Milch bereits bis zu einer gewissen Höhe angesammelt hat, bevor die Messung durchgeführt wird. Unter diesen Bedingungen ist die in der Nähe des Bodens befindliche Milch bei geeigneter Dimensionierung des Gefäßes bereits weitgehend entlüftet.

Es hat sich herausgestellt, daß die Messungen prinzipiell mit verschiedenen Methoden unter Ausnutzung verschiedener Parameter der Milch durchgeführt werden können. Besonders geeignet sind hierfür solche Messungen, bei denen sich der Meßwert, der sich für entlüftete Milch ergibt um wenigstens eine Größenordnung von dem Meßwert gemessen für Luft, unterscheidet. Aus diesen Werten wird sodann die Verhältniszahl derart gebildet, daß sich für das Verhältnis des Meßwertes für Luft im Verhältnis zu dem Bezugsmeßwert bzw. durch Bildung des Kehrwertes eine Verhältniszahl wesentlich kleiner als 1 ergibt, während sich für das Verhältnis des Meßwertes für entlüftete Milch im Verhältnis zu dem Bezugsmeßwert automatisch jeweils der Wert 1 ergibt.

Messungen dieser Art können unter Ausnutzung der sich in Abhängigkeit von den Milch/Luftverhältnis sehr stark ändernden Eigenschaften der Milch, wie der elektrischen Leitfähigkeit, der Wärmeleitfähigkeit oder der Infrarotabsorptionsfähigkeit gemessen werden. Als Meßgrößen können etwa unter Ausnutzung der Änderung der elektrischen Leitfähigkeit der Milch, der Widerstand der Meßstrecke, bei der Ausnutzung der IR-Absorption, die durchgelassene Lichtmenge oder bei der Ausnutzung der Wärmeleitfähigkeit der Milch der Spannungsabfall an einem Temperatursensor dienen.

Gemäß einer bevorzugten Ausführungsform der Erfindung können die sich aufgrund von Veränderungen oder Verschmutzungen der einzelnen Elektroden oder Meßstrecken ergebenden Abweichungen der einzelnen Meßstrecken dadurch kompensiert werden, daß unter Verwendung einer gleichen Eichflüssigkeit, wie etwa Wasser, auf allen Höhenniveaus gleiche Messungen durchgeführt werden. Aus den sich ergebenden Messungen, einschließlich der Messung auf der Bezugsmeßstrecke, wird ein Mittelwert gebildet und die Abweichungen der einzelnen Meßstrecken von diesem Mittelwert werden mit einem entsprechenden Korrekturfaktor für die tatsächliche Messung berücksichtigt.

An sich ist es möglich, die Parameter der Meßvorrichtung geeignet derart zu wählen, daß die gemessene Verhältniszahl $c'_m$ keiner Korrektur mehr bedarf. Im allgemeinen ist es jedoch notwendig, einen Bautyp von Meßvorrichtung vor den eigentlichen Messungen einmal zu eichen. Hierdurch wird die tatsächlich gemessene Verhältniszahl $c'_m$ entsprechend der spezifischen Dichte des Milch/Luftgemisches korrigiert. Dies kann, wie sich herausgestellt hat, in einem einfachen Fall dadurch erfolgen, daß die gemessenen Verhältniszahlen $c'_m$ jeweils mit einem Exponenten, der größer als Null ist, potenziert werden, um korrigierte Verhältniszahlen $c'_m$ zu bilden. Wenn der Exponent in einem solchen Fall einmal durch eine Eichung bestimmt ist, bleibt er für alle späteren Messungen unverändert.

Gemäß der Erfindung wird auch eine Vorrichtung zur Durchführung des Meßverfahrens nach der ersten Lösung angegeben, die sich dadurch auszeichnet, daß zur Messung der spezifischen Dichte der schäumenden Flüssigkeit in Abhängigkeit von der Höhe auf den verschiedenen Höhenniveaus eine im wesentlichen entgaste Flüssigkeit der zu messenden schäumenden Flüssigkeit enthaltende Bezugsmeßstrecke ($E_0$, $E_1$) vorgesehen ist, daß eine Vorrichtung (MP) vorgesehen ist, die in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert und dem Meßwert auf diesem Höhenniveau oder entsprechend dem Kehrwert dieses Verhältnisses bildet, so daß die Verhältniszahl ($c'_m$) für entgaste Flüssigkeit gleich 1 und für Luft im wesentlichen gleich Null ist, und daß ein Multiplikationsglied vorgesehen ist, mit dem jede Verhältniszahl ($c'_m$) mit dem wert für die spezifische Dichte ($\rho$) der entgasten Flüssigkeit multipliziert wird.

Eine erfindungsgemäße Vorrichtung zur Durchführung des Meßverfahrens nach der zweiten Lösung zeichnet sich dadurch aus, daß auf den verschiedenen Höhenniveaus eine im wesentlichen entgaste Flüssigkeit der zu messenden schäumenden Flüssigkeit enthaltende Bezugsmeßstrecke ($E_0$, $E_1$) vorgesehen ist, daß eine Vorrichtung (MP) vorgesehen ist, die in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert und dem Meßwert auf diesem Höhenniveau oder entsprechend dem Kehrwert dieses Verhältnisses bildet, so daß die Verhältniszahl ($c'_m$) für entgaste Flüssigkeit gleich 1 und für Luft im wesentlichen gleich Null ist, und das ein Multiplikationsglied vorgesehen ist, mit dem jede Verhältniszahl $(c'_m)$ mit dem Wert für die spezifische Dichte $(\rho)$ der entgasten Flüssigkeit und mit der Größe des zwischen diesem Höhenniveau und dem darunterliegenden Höhenniveau eingeschlossenen Volumen $(V_m)$ in dem Gefäß multipliziert wird, so daß das das Produkt $(c'_m \times V_m \times \rho)$ gebildet wird, und daß eine Addiervorrichtung (MP) zum Addieren der für alle Höhenniveaus (n) gebildeten Produkte zur Angabe der Gesamtflüssigkeitsmasse (G) als

$$G = \sum_{m=1}^{n} c'_m \times V_m \times \rho \quad .$$

vorgesehen ist.

Vorzugsweise wird die Meßvorrichtung an einer Meßkammer einer chargenweise messenden Meßvorrichtung vorgesehen.

Eine erfindungsgemäße Vorrichtung zur Durchführung des Meßverfahrens nach der dritten Lösung zeichnet sich dadurch aus, daß auf den verschiedenen Höhenniveaus mit jeweils gleichem Höhenniveauabstand (d) eine im wesentlichen entgaste Flüssigkeit der zu messenden schäumenden Flüssigkeit enthaltende Bezugsmeßstrecke $(E_0, E_1)$ vorgesehen ist, daß eine Vorrichtung vorgesehen ist, die in Abhängigkeit davon, ob ein in Luft gemessener entsprechender Meßwert $(I_L)$ größer oder kleiner als der auf der Bezugsmeßstrecke erhaltene Bezugsmeßwert $(I_0)$ ist, für jedes Höhenniveau eine Verhältniszahl $(c'_m)$ entsprechend dem Verhältnis aus dem Bezugsmeßwert und dem Meßwert auf diesem Höhenniveau oder entsprechend dem Kehrwert dieses Verhältnisses bildet, so daß die Verhältniszahl $(c'_m)$ für entgaste Flüssigkeit gleich 1 und für Luft im wesentlichen gleich Null ist, daß die Flüssigkeit dem Gefäß zugeführt wird und Flüssigkeit kontinuierlich über einen im wesentlichen senkrechten Schlitz abfließt und Meßwerte der Verhältniszahl $(c'_m)$ auf den verschiedenen Höhenniveaus (m) in bezug auf den Schlitz bestimmt werden, und daß eine Rechenvorrichtung (MP) vorgesehen ist, die die Größe des Flüssigkeitsflusses aus der Gleichung

$$\dot{m}_{eff} = \left[ K \cdot \sum_{m=1}^{n} \sqrt{c'_m \cdot \sum_{i-m}^{n} c'_i} \right] \left( 1 - a \sqrt{K \sum_{m=1}^{n} \sqrt{c'_m \sum_{i=m}^{n} c'_i}} \right),$$

bestimmt, worin bedeuten:

$$\dot{m}_{eff} \left[ \frac{g}{sec} \right] =$$

gesamter aus dem Schlitz austretender Massenstrom

$K = d \times s \times \rho \sqrt{2gd}$

$d \ [cm] = $ Höhenniveauabstand

$$g \left[ \frac{cm}{sec^2} \right] = 981 \ \frac{cm}{sec^2}$$

S [cm] = Schlitzbreite

$$\rho \left[ \frac{g}{cm^3} \right] =$$

spezifisch Dichte der Flüssigkeit

n = Gesamtzahl der Höhenniveaus

$c'_m$ = Verhältniszahl zwischen 1 und 0 auf dem Höhenniveau m

a = von Schlitzbreite, Schlitzkante etc. abhängige, durch Eichung ermittelte Konstante der Meßvorrichtung.

Als besonders geeignet hat sich insbesondere für die Messung von Milch als schäumender Flüssigkeit eine Vorrichtung erwiesen, bei der an dem Gefäß auf jedem Höhenniveau eine Elektrode angeordnet ist und eine allen Elektroden gegenüberliegende gemeinsame Gegenelektrode vorgesehen ist. Die Anordnung kann hierbei so ausgestaltet sein, daß unter Ausnutzung der Änderung der elektrischen Leitfähigkeit der Milch in Abhängigkeit von dem Milch/Luftgemisch der elektrische Widerstand auf jeder Meßstrecke, d.h. zwischen einer Elektrode und der Gegenelektrode meßbar ist.

Hierzu wird vorzugsweise zur Vermeidung von Polarisationen eine Wechselspannung verwendet. Weiterhin wird zweckmäßigerweise auch zur Ausschaltung jeglichen Gleichstromanteils zwischen die Spannungsquelle und die gemeinsame Gegenelektrode ein Entkopplungskondensator geschaltet. Zur Verbesserung des Einschaltverhaltens und zur Vermeidung von zeitlichen Drifterscheinungen sollte die Frequenz bevorzugt zwischen 200 Hz und 80 kHz und bevorzugt bei einer Frequenz von 2 kHz liegen.

In Anbetracht der in der Milch bevorzugt auftretenden Luftblasengrößen werden hier Elektroden verwendet, die im wesentlichen kreisförmig sind und einen Durchmesser zwischen etwa 0,5 und 1,2 mm aufweisen.Bei der Feinoptimierung wurde für die größeren Durchmesser dieses Bereiches eine stärkere Abhängigkeit von kleinen Luftblasendurchmessern und für kleine Elektroden dieses Bereiches eine stärkere Abhängigkeit von großen Luftblasendurchmessern festgestellt. Um eine möglichst gleichmäßige Abhängigkeit zu erreichen, wird vorzugsweise ein Elektrodendurchmesser von 0,8 mm verwendet.

Der gegenseitige Höhenabstand der Elektroden voneinander lag vorzugsweise in einem Bereich von 1 bis 8 mm. Besonders günstige Ergebnisse wurden bei einem Höhenabstand von 1,5 mm erreicht.

Je kleiner der Abstand zwischen Elektrode und Gegenelektrode war, um so stärker war die Änderung der Verhältniszahl in Abhängigkeit von dem jeweiligen Meßwert. Bevorzugt wurden deshalb Elektrodenabstände zwischen 2 und 150 mm und bevorzugt von 3 bis 8 mm verwendet.

Bei den Ausführungsformen, bei denen die Verhältniszahlen aus Meßwerten der elektrischen Leitfähigkeit von Milch gebildet werden, ergab sich, daß die aufgrund einer Eichung notwendigen Korrekturen der gemessenen Verhältniszahlen durch Potenzieren mit derselben Zahl größer als Null erreicht werden konnten.

Gemäß einer weiteren vorzugsweise verwendeten Meßanordnung werden eine IR-Lichtquelle und eine Spiegelanordnung vorgesehen, mit deren Hilfe der IR-Lichtstrahl aufeinanderfolgend auf verschiedenen Höhenniveaus durch die in dem Gefäß enthaltene Milch strahlbar ist, und es wird ein für alle Höhenniveaus gemeinsamer oder für jedes Höhenniveau ein eigener elektrooptischer Wandler vorgesehen, der ein der empfangenen Lichtstärke entsprechendes elektrisches Meßwertsignal erzeugt.

Eine weitere Meßanordnung, die unter Ausnutzung der Änderung der Wärmeleitfähigkeit eines Milch/Luftgemisches arbeitet, zeichnet sich aus durch an dem Milchgefäß in den verschiedenen Höhenniveaus angeordnete PTC-Temperatursensoren, durch Konstantstromquellen, die den PTC-Temperatursensoren jeweils eine konstante Heizleistung zuführen, und durch Widerstandmeßkreise, die den der Temperatur eines PTC-Temperatursensors entsprechenden Widerstandswert als Meßwert bestimmen.

Im folgenden soll die Erfindung näher anhand von in der Zeichnung dargestellten Ausführungsformen beschrieben werden. Die Ausführungsformen nehmen aus Einfachheitsgründen jeweils Bezug auf Messungen an Milch. Es soll jedoch klargestellt werden, daß die Erfindung auch auf jede andere schäumende Flüssigkeit anwendbar ist. In den Zeichnungen zeigen:

Fig.1    schematisch eine erste Ausführungsform der Erfindung zur Messung des elektrischen Widerstandes einer Milch/Luftmeßstrecke sowie die zugehörige Schaltung,

Fig.2    ein Diagramm zur Erläuterung der Verhältniszahl,

Fig.3     den Verlauf der Verhältniszahl c in ausgezogener Linie , wie er von den übereinanderliegenden Elektroden einer bestimmten Meßanordnung zu einer bestimmten Zeit für eine Milchmenge in einem Gefäß gemessen wurde, sowie den Verlauf der nach Eichung der Meßanordnung korrigierten Verhältniszahl c' in gestrichelter Linie,

Fig.4     schematisch eine Vorrichtung zur chargenweisen Messung von Milchmengen unter Verwendung des erfindungsgemäßen Verfahrens,

Fig.5     schematisch eine andere Ausführungsform einer chargenweisen Milchmengenmessung unter Anwendung der Erfindung,

Fig.6     schematisch eine Vorrichtung zur kontinuierlichen Flußmengenmessung unter Anwendung der Erfindung,

Fig.7     eine grafische Darstellung der gemessenen Verhältniszahl c' für die einzelnen Meßelektroden zu einem Zeitpunkt innerhalb eines Meßzyklus,

Fig.8     eine grafische Darstellung entsprechend der

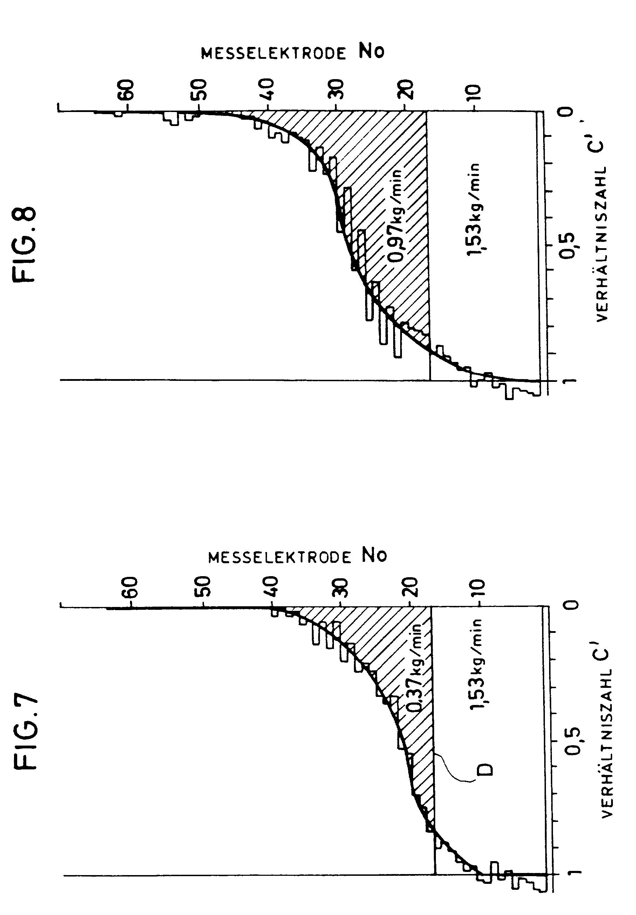

Fig. 7     gemessen während desselben Meßzyklus zu einem späteren Zeitpunkt,

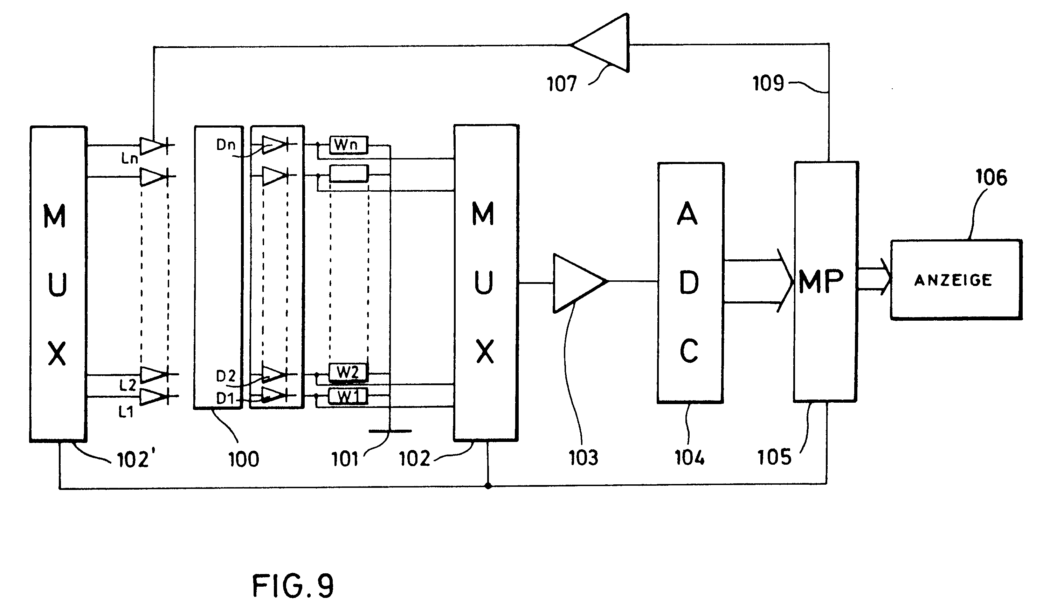

Fig.9     eine schematische Darstellung einer anderen Ausführungsform der Erfindung, bei der die Messung der Verhältniszahl optisch erfolgt, sowie eine entsprechende Schaltanordnung,

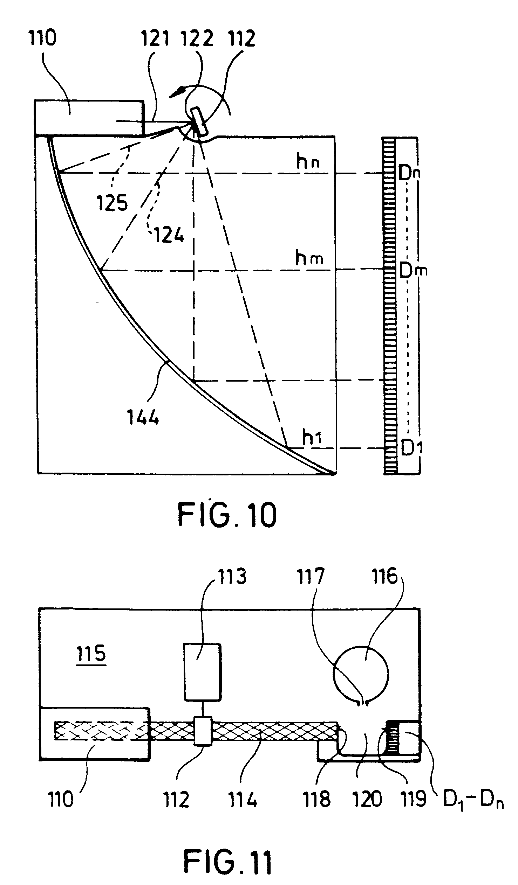

Fig.10     schematisch einen Längsschnitt durch eine ähnliche Meßvorrichtung, wie sie in Fig. 9 verwendet wird, wobei jedoch lediglich eine Lichtquelle verwendet wird,

Fig.11     schematisch eine Draufsicht auf die in Fig. 10 gezeigte Anordnung, und

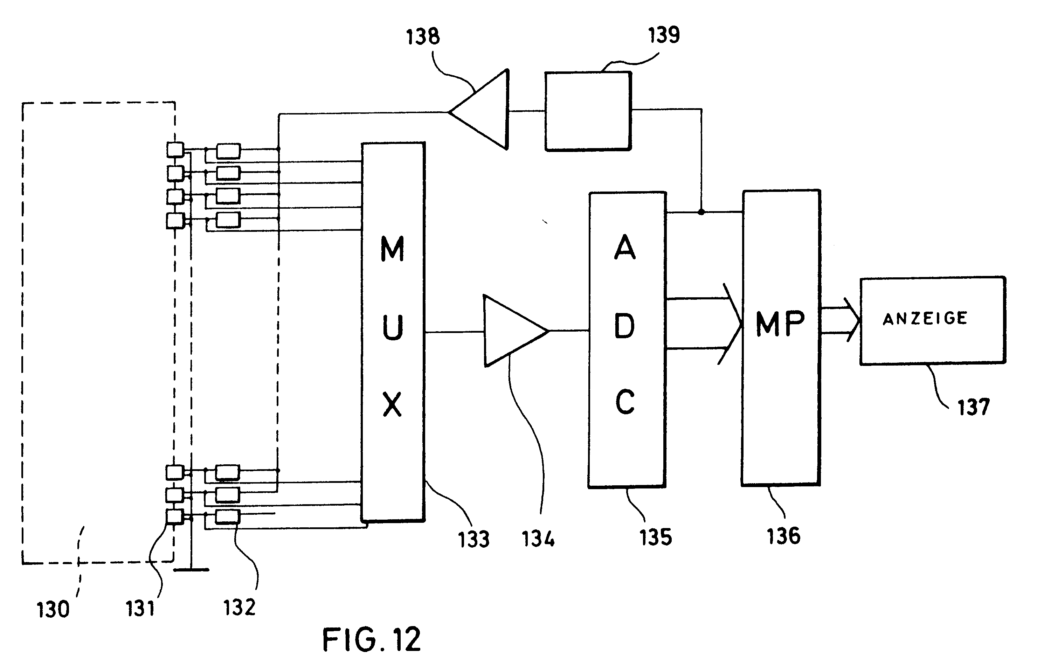

Fig.12     schematisch eine weitere Ausführungsform der Erfindung mit einer zugehörigen Schaltung, bei der die Verhältniszahl unter Ausnutzung der unterschiedlichen Wärmeleitfähigkeit eines Milch/Luftgemisches gemessen wird.

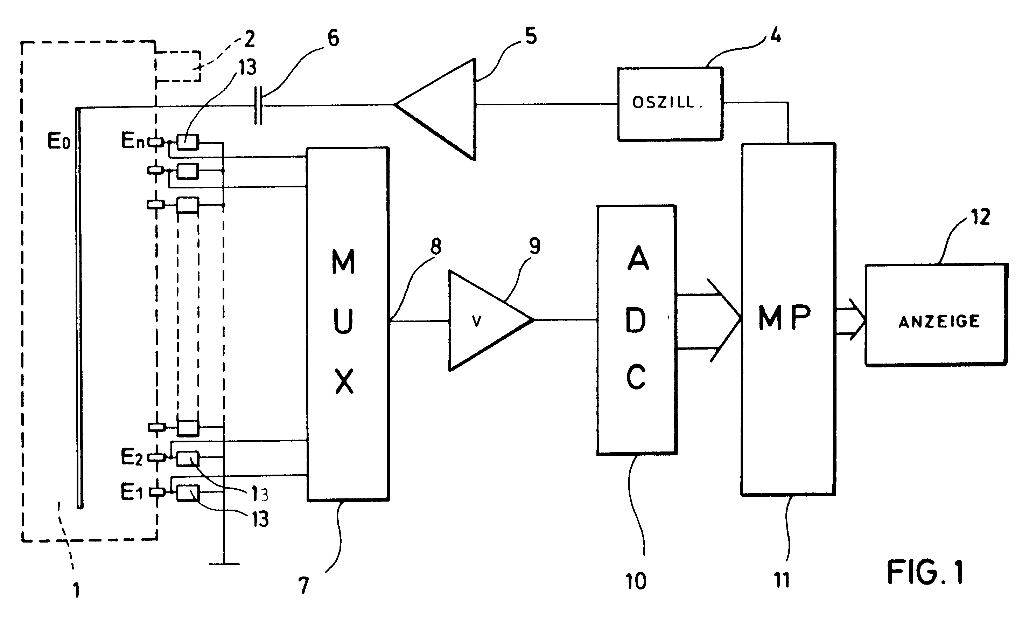

In Fig. 1 ist schematisch ein Gefäß 1 dargestellt, in das über einen oberen Zulauf 2 Milch kontinuierlich oder diskontinuierlich zugeführt wird. Auf der Innenseite des Gefäßes 1 sind in gleichen Höhenabständen übereinander mehrere einzelne und voneinander elektrisch isolierte Elektroden $E_1$ bis $E_n$ angeordnet. Diese Elektroden können auch durch die Wand des Gefäßes hindurch geführt sein. Die Elektroden brauchen nicht senkrecht übereinander angeordnet zu werden, sondern können etwa auch auf einer Schraubenlinie oder auch ein über das andere Mal seitlich gegeneinander versetzt übereinander angeordnet sein. In dem Gefäß ist eine allen Elektroden gegenüberstehende und im gleichen Abstand von diesen angeordnete gemeinsame Gegenelektrode $E_0$ angeordnet. Die Gegenelektrode $E_0$ wird von einem Oszillator 4 über einen Konstantspannungskreis 5 sowie einen Entkopplungskondensator 6 mit Spannung versorgt. Die Spannung ist vorzugsweise eine Sinuswechselspannung, jedoch könnte auch etwa eine dreiecksförmige Wechselspannung verwendet werden. Die Elektroden $E_1$ bis $E_n$ sind jeweils über Widerstände 13 mit Masse verbunden. Die Verbindungspunkte zwischen den einzelnen Elektroden $E_1$ bis $E_n$ und ihren hiermit in Reihe liegenden Widerständen 13 sind jeweils mit einem Multiplexer 7 (analog) verbunden. Der Ausgang 8 des Multiplexers 7 ist über einen aktiven Gleichrichter 9 mit einem Analog/Digital-Wandler 10 verbunden. Dieser führt die Meßwerte einem Mikroprozessor 11 zu, der andererseits mit dem Oszillator 4 gekoppelt ist. An den Ausgang des Mikroprozessors 11 ist eine Anzeigevorrichtung 12 bzw. ein Drucker angeschlossen.

Die Größe des Gefäßes 1 hängt natürlich von der insgesamt zu messenden Milchmenge ab. Entsprechend ist der Durchmesser bzw. Querschnitt des Gefäßes zu wählen. Da gemäß der Erfindung jeweils die Verhältnisse der spezifischen Dichte der Milch absatzweise in übereinanderliegenden Schichten beurteilt werden, hängt das Volumen jeder Schicht natürlich sowohl von dem Querschnitt des Gefäßes wie auch von dem gegenseitigen Höhenabstand der einzelnen Elektroden $E_1$ bis $E_n$ ab. Zur Vereinfachung wurde ein zylindrisches Gefäß und ein konstanter Höhenniveauunterschied gewählt. Der Höhenabstand der Eletroden voneinander betrug 1,5 mm. Die Elektroden bestanden aus im Querschnitt kreisförmigen Elektroden, die einen Durchmesser von 0,8 mm aufwiesen. Wie eingangs bereits ausgeführt wurde, haben die sich in der Milch bildenden Blasen einen unterschiedlichen Durchmesser. Der Teil der Milch, der große Luftblasen aufweist, entlüftet bzw. entgast verhältnismäßig schnell und zudem ist der Anteil, der in einem Schaum mit großen Blasen enthaltenen Milch verhältnismäßig gering. Der Anteil der Milch, in dem kleinere Blasen enthalten sind, entgast dagegen wesentlich langsamer und der Anteil der Milch in diesem Milch/Luftgemisch, d.h. diesem Schaum, ist wesentlich höher. Es wurde gefunden, daß bei der Verwendung von Elektroden mit einem größeren Durchmesser als 0,8 mm eine stärkere Abhängigkeit der Meßwerte von sehr kleinen Blasen erhalten wurde, während die mittleren bzw. größeren Blasen praktisch keinen feststellbaren Einfluß mehr in Form einer merklichen Änderung des Meßwertes zeigten. Dagegen zeigten Elektroden, mit zunehmend kleinerem Durchmesser als 0,8 mm ein verstärktes Ansprechen auf Blasen mit verhältnismäßig größerem Durchmesser, während kleine und mittlere Luftblasen nur eine geringe Änderung des Meßwertes zeigten. Aus diesem Grunde wurde bevorzugt für den Elektrodendurchmesser ein Mittelwert von 0,8 mm gewählt, für den sich sowohl eine Abhängigkeit für kleine wie für große Blasen feststellen läßt.

Die Arbeitsweise der in Fig. 1 gezeigten Meßvorrichtung ist wie folgt:

Durch den Oszillator 4 wird an die Gegenelektrode $E_0$ eine Wechselspannung angelegt. Bevorzugt wurde dabei eine Freuquenz von 2 kHz verwendet. Bei wesentlich größeren Frequenzen von etwa 20 bis 80 kHz zeigte sich zwar ein besseres, nämlich verkürztes Einschwingverhalten, jedoch wurden die erhaltenen Meßsignale kleiner. Bei wesentlich niederen Frequenzen von 200 Hz dagegen, waren die erhaltenen Meßsignale größer, jedoch wurde hier ein langes Einschwingverhalten und gegebenenfalls sogar eine über längere Zeit dauernde Drift beobachtet. Es wurde deshalb bevorzugt im Dauerbetreib gearbeitet.

Eine untere Grenze für die Meßfrequenz wurde auch dadurch gesetzt, daß die Gesamtzahl n der Elektroden möglichst unterhalb einer Gesamtzeit von etwa 0,5 sec abgetastet werden soll. Schließlich wurde überhaupt eine Wechselspannung verwendet, um irgendwelche Polarisationserscheinungen auszuschalten. Aus diesem Grunde wird auch nach dem Konstantspannungsverstärker 5 ein Entkopplungskondensator 6 verwendet, der irgendwelche Gleichspannungsanteile unterdrückt.

Die Meßstrecke bildet nur einen Ohm'schen Widerstand. Alle Elektroden werden gleichphasig betrieben. Eine Phasenverschiebung, die sich durch den Entkopplungskondensator ergibt, wirkt sich aufgrund der Schaltung des Entkopplungskondensators zwischen Oszillator und gemeinsamer Gegenelektrode für alle Elektroden gleich aus.

Aufgrund der wesentlich höheren Leitfähigkeit von Milch gegenüber der Leitfähigkeit von Luft ergibt sich an den Elektroden, zwischen denen bereits Milch liegt, ein wesentlich höheres Meßwertsignal als an solchen Elektroden, zwischen denen praktisch nur Luft vorhanden ist. Das Meßwertsignal ergibt sich für jede Elektrode $E_m$ anseinem zugehörigen Widerstand 13 in Form eines entsprechenden Spannungsabfalls. Diese an den einzelnen Elektroden $E_1$ bis $E_n$ auftretenden Meßwertsignale werden sodann durch den Multiplexer 7 zeitlich hintereinander einzeln abgetastet und über einen verstärkenden Gleichrichter auf den Analog/Digital-Wandler 10 gegeben, der sodann entsprechend digitale Ausgangssignale an den Mikroprozessor 11 weiterleitet. Die Abtastung aller Elektroden durch den Multiplexer erfolgt bevorzugt in einer Gesamtzeit, die kleiner und gegebenenfalls wesentlich kleiner als die Zeitdifferenz zwischen zwei aufeinanderfolgend ankommenden Milchstößen ist. Werden etwa die Zitzen einer Kuh im Wechseltakt gemolken, so beträgt diese Zeitdifferenz etwa 0,5 Sekunden. Eine zweckmäßige Gesamtabtastzeit liegt in diesem Fall bei 0,1 Sekunden.

Der Mikroprozessor hat zunächst die Aufgabe, die Verhältniszahl $c'_m$ zu bilden. Hierzu speichert er zunächst den Meßwert auf einer Bezugsmeßstrecke. Als Bezugsmeßstrecke wird, wie bereits oben ausgeführt wurde, bevorzugt der Meßwert genommen, der auf dem untersten Höhenniveau, d.h. dem Höhenniveau unmittelbar oberhalb des Bodens des Meßgefäßes 1 gemessen wird. Es wird hierbei davon ausgegangen, daß die Milch, die sich unmittelbar über dem Boden des Gefäßes befindet, praktisch bereits vollständig entgast ist. Im vorliegenden Falle wird also der Meßwert, der durch die unterste Elektrode, d.h. die Elektrode $E_1$ gemessen wird, als Bezugswert verwendet. Wird etwa als Meßwert der Widerstand $R_m$ gemessen, der sich jeweils auf einer Meßstrecke m zwischen einer Elektrode und der Gegenelektrode ergibt, so bildet der Meßwert $R_1$ für die Elektrode $E_1$ den Bezugsmeßwert $R_0$. Da der Widerstand in reiner Luft größer als unter gleichen Meßbedingungen in entgaster Milch ist, wird somit als Verhältniszahl $c'_m$ für jede Elektrode $E_m$ das Verhältnis

$$\frac{R_0}{R_m} = c'_m$$

gebildet. Sofern die Bedingungenen für alle Meßstrecken und die Bezugsmeßstrecke gleich sind, liegen die Werte der Verhältniszahl $c'_m$ zwischen 1, was praktisch entgaster Milch entsprechen würde und dem Wert 0, der praktisch einer Meßstrecke in Luft entsprechen würde.

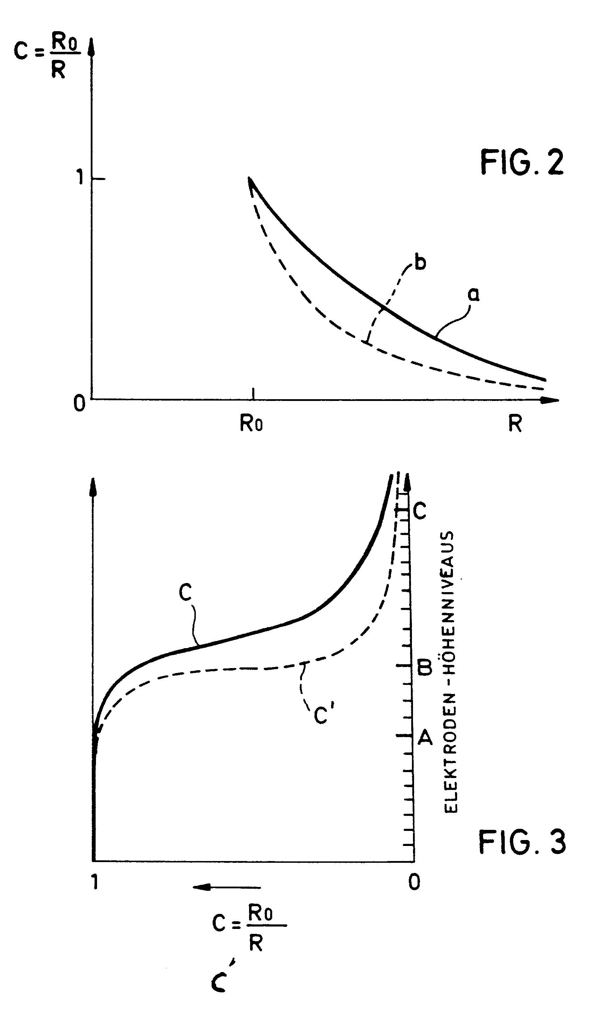

In der Fig. 2 ist beispielsweise die Abhängigkeit der Verhältniszahl

$$c = \frac{R_0}{R}$$

von der Größe des Meßwertes R dargestellt. Es sei darin erinnert, daß c die auf einem Höhenniveau gemessene Verhältniszahl ist, mit der die spezifische Dichte $\rho$ der entgasten Milch multipliziert wird, um die spezifische Dichte des Schaumes auf diesem Höhenniveau zu bestimmen. Der Verlauf dieser Hypernelkurve hängt nun, wie festgestellt wurde, auch von dem Abstand zwischen den Elektroden una der Gegenelektrode ab. Bei großen Elektrodenabständen bzw. Meßstrecken, bei denen jedoch die nutzbaren Signale verhältnismäßig klein sind, entspricht der Verlauf der Kurve etwa der Kurve a, während sich bei kleinen Elektrodenabständen etwa ein Verlauf entsprechend der Kurve b ergibt, d.h. der Verlauf der Hyperbel ist steiler. Wie zu ersehen ist, stellen die beiden unterschiedlichen Kurven unterschiedliche Bewertungen des Anteils an Milch in dem Schaum oder genauso eine unterschiedliche Beurteilung von Luft in dem betreffenden Schaum dar. Vor dem Einsatz eines jeden Meßgeräts ist es allgemein üblich dieses zu eichen. Entsprechend muß auch hier jede Meßanordnung deshalb noch vor ihrem Einsatz eine bestimmte Eichung etwa durch Vergleich der errechneten Milchmasse G mit der etwa durch Wägung festgestellten Milchmasse durchgeführt werden, um die jeweilig gemessene Verhältniszahl c entsprechend der Eichung zu korrigieren.

Allgemein kann eine Eichung etwa auf die folgende Weise durchgeführt werden: Ein Exemplar der zu eichenden baugleichen Meßgefäße mit den darin enthaltenen Meßsensoren wird zuerst leer gewogen, anschließend mit schäumender Milch befüllt und aus dem Meßwert $I_m$ und $I_0$ wird die Verhältniszahl $c'_m$ für jedes Höhenniveau m gebildet. Danach wird wieder gewogen, um die Masse G der eingefüllten schäumenden Milch zu bestimmen. Dieser Vorgang wird mit möglichst verschieden schäumender Milch etwa von unterschiedlichen Kühen unter möglichst unterschiedlichen Melkbedingungen 50 bis 100 mal wiederholt.

Aus dem so erhaltenen Datenmaterial werden die zunächst gebildeten Verhältniszahlen $c_m$ mit Hilfe eines an sich bekannten mathematischen Suchverfahrens so in korrigierte Verhältniszahlen $c'_m$ transformiert, daß folgende Gleichung für alle durchgeführten Eichmessungen (Wägungen) erfüllt wird:

$$G = \rho \times \sum_{m=1}^{n} V_m \times c'_m$$

wobei:

$$c'_m = \bar{a} + \bar{b} \times c_m + \bar{d} \times c^z_m \text{ und}$$
$$0 \leq c'_m \leq 1.$$

Die Koeffizienten $\bar{a}$, $\bar{b}$, $\bar{d}$, z dieses allgemeinen Regressionsansatzes können mit Hilfe der stufenweisen Regressionsanalyse an die gesuchten wahren Koeffizientenwerte schrittweise angenähert werden. Entscheidungskriterium für den Grad der Annäherung ist bei diesem mathematischen Verfahren die Minimierung der Summe der quadrierten Abweichungen zwischen der jeweiligen gewogenen und errechneten Masse der Milch.

Falls die aus den Messungen gebildeten Verhältniszahlen $c_m$ bereits zwischen Null und 1 liegen, reicht es meistens aus, $\bar{a} = \bar{b} = 0$ sowie $\bar{d} = 1$ zu setzen und nur noch z zu variieren. Der Wert für z, der sich in diesen Fällen aus der Regressionsanalyse ergibt, liegt zwischen etwa 0,33 und 3.

Nach dem gleichen Prinzip kann die Eichung, der weiter unten noch zu erläuternden Flußmesser, erfolgen. Insbesondere kann hilfsweise auch der zu ermittelnde Massenstrom noch durch Wägung (und Differenzierung) über ein nachgeschaltetes Wägegefäß ermittelt werden. Hierbei wird zu aufeinanderfolgenden Zeiten das Wägegefäß gewogen. Natürlich muß hierbei die Zeitverzögerung in Betracht gezogen werden, die sich zwischen der jeweiligen Messung an den Elektroden in dem Meßgefäß und dem Einfließen des Milch-/Schaumgemisches in das Wägegefäß ergibt.

Bei der anhand der Fig. 1 beschriebenen Meßanordnung wurde gefunden, daß jeweils eine Korrektur der gemessenen Verhältniszahl c mit ein und demselben Exponenten vorgenommen werden konnte, der zwischen 1 und 2 liegt, um auf diese Weise die durch Summation bestimmte Milchmasse mit der durch Wägung festgestellten Milchmasse in Übereinstimmung zu bringen. Auf diese Weise werden die korrigierten, geeichten Verhältniszahlen c' erhalten. So wurden etwa bei der Kurve a in Fig. 2 , die mit einem Elektrodenabstand von 30 mm gemessen wurde, alle $c_m$-Werte mit einem Exponenten von etwa 1,6 potenziert. Bei der Kurve b dagegen, die bei einem Elektrodenabstand von 3 mm gemessen wurde, mußten alle gemessenen $c_m$-Werte mit einem Exponenten von etwa 1,1 potenziert werden.( D.h. es wird jeweils $(c_m)^z = c'_m$ gebildet, worin z der durch die Eichung bestimmte Exponent ist.)

Der Mikroprozessor bestimmt also unter Berücksichtigung der gegebenenfalls durch die Eichung notwendigen mathematischen Korrektur für jede Abtastung einer Elektrode $E_m$ eine zugehörige Verhältniszahl $c'_m$. Diese Verhältniszahl wird mit der normalen Dichte $\rho$ der Milch multipliziert, so daß man sagen kann, daß das Produkt $c'_m$ x $\rho$ eine entsprechend dem Luftanteil modifizierte spezifische Dichte für jedes Höhenniveau m ergibt. Da bei der beschriebenen Ausführungsform das Volumen $V_m$ zwischen jeweils zwei aufeinanderfolgenden Höhenniveaus bzw.

Elektroden $E_m$ und $E_{m-1}$ gleich ist, etwa gleich V, so erhält man durch Multiplikation der Werte $c'_m$ x $\rho$ x V die Milchmasse, die in der betreffenden Höhenschicht vorliegt. Durch Summation dieser Milchmassen für jedes Höhenniveau m über alle Höhenniveaus 1 bis n ergibt sich sodann die Gesamtmasse an Milch in dem Gefäß 1. Diese Rechenvorgänge werden automatisch von dem Mikroprozessor MP ausgeführt. Die Gesamtmilchmasse wird auf der Anzeigevorrichtung 12 angezeigt.

In der Fig. 3 ist nun in einer schematischen Darstellung die Abhängigkeit der gemessenen Werte der Verhältniszahl c in Abhängigkeit von den Höhenniveaus, d.h. in Abhängigkeit von den übereinanderliegenden Elektroden aufgezeichnet. Auf der Ordinate bezeichnen die einzelnen Markierungen die übereinanderliegenden Elektroden bzw. Höhenniveaus. Auf der Abszisse ist der Wert für die Verhältniszahl c angegeben. Bei der hier beschriebenen Ausführungsform schwankt dieser Wert bereits nur noch zwischen 1 und Null. Die Kurve c' zeigt die Verhältniszahlen, die jeweils aus den gemessenen Verhältniszahlen c durch Potenzieren mit einem bestimmten Exponenten erhalten wurden. Für die Kurve c' bedeutet 1 Milch ohne Luft, während der Wert Null Luft ohne Milch angibt. Die Darstellung zeigt, daß praktisch bis zu dem Höhenniveau A alle Elektroden den Meßwert c' = 1 ergeben, was besagt, daß bis zu dieser Höhe praktisch luftfreie Milch vorliegt. In dem Bereich zwischen den Höhenniveaus A und B beginnt der Wert c' von 1 abzuweichen, was bedeutet, daß in dieser Schicht bereits eine mit Luft versetzte Milch vorliegt. Oberhalb des Höhenniveaus B nimmt der Anteil der Luft stark zu und oberhalb des Niveaus C ist der Anteil der Milch praktisch nicht mehr meßbar, d.h. bedeutungslos.

Das erfindungsgemäße Meßverfahren ermöglicht nun nicht nur das Messen der Milchmasse in einem Sammelgefäß, sondern auch die Messung des jeweiligen Milchflusses und die Bestimmung der Gesamtmilchmasse aus dem über die Zeit gemessenen Milchfluß.

Bisher bestand bei den bereits eingangs erwähnten chargenweisen Milchflußmessern, bei denen etwa jeweils der Milchpegel beim Einfließen der Milch in eine Milchkammer durch eine erste Meßelektrode und beim Ausfließen der Milch aus der Milchkammer durch eine zweite Meßelektrode bestimmt wird, folgendes Problem: Je kleiner das Volumen ist, das durch das Niveau der ersten Elektrode und das Niveau der zweiten Elektrode abgegrenzt wird, desto genauer ist prinzipiell die Gesamtmengenmessung, weil ein am Ende des Melkzyklus verbleibender Milchrest, der nicht mehr ausreicht, um die auf dem höheren Niveau liegende Elektrode zu betätigen, nicht mehr mitberücksichtigt wird. Hat etwa das zwischen den beiden Elektrodenniveaus liegende Volumen eine Größe von beispielsweise 200 cm$^3$, so bedeutet dies also eine Fehlermöglichkeit von 200 cm$^3$. Wählt man jedoch ein kleineres Volumen für die chargenweise abzuführende Milch, so müssen die Steuerorgane öfter geschaltet werden. (Beispielsweise bei einem Milchfluß von 6000 cm$^3$/min. und einem Volumen von 200 cm$^3$/Charge müssen die Steuerorgane bereits alle 2 Sekunden geschaltet werden.) Das bedeutet aber, daß die Verweilzeit und damit die Entgasungszeit der Milch in dem Meßraum mit kleiner werdendem Chargenvolumen immer kürzer wird und damit die Messung wegen des störenden Luftanteils immer ungenauer wird. Dieser Nachteil kann durch das erfindungsgemäße Verfahren vollständig beseitigt werden.

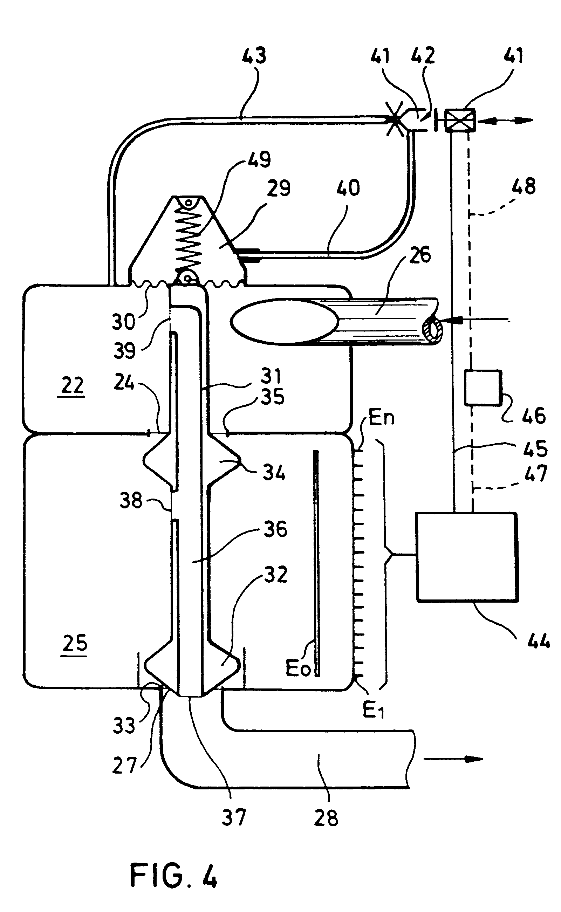

In Fig. 4 ist eine Ausführungsform einer Milchmengenmeßvorrichtung gezeigt, bei der die Milch chargenweise gemessen wird. Die Vorrichtung 20 umfaßt ein Gehäuse 21, das eine obere Einlaufkammer 22 umgrenzt, die über eine Trennwand 23 mit einer darin ausgebildeten Überlauföffnung 24 von der darunter liegenden Meßkammer 25 abgegrenzt ist. In die Einlaufkammer 22 gelangt über ein tangential in die Einlaufkammer 22 mündendes Zulaufrohr 26 die unter dem Melkvakuum stehende, abgemolkene Milch.

14

Über eine Ablauföffnung am Boden der Meßkammer 25 fließt die Milch aus der Meßkammer 25 in eine Milchtransportleitung 28 ab.

Auf der Oberseite des Gehäuses 21 ist ein Steuergehäuse 29 angebracht. Die Einlaufkammer 22 grenzt über eine Membran 30 an den Innenraum des Steuergehäuses 29 an. An der Membran 30 ist ein Stempel 31 befestigt, der nach abwärts durch die Einlaufkammer in die Meßkammer hineinragt. Das untere Ende des Stempels ist als ein Ventilstößel 32 ausgebildet, der mit einem durch die Ablauföffnung 27 gebildeten Ventilsitz 33 zusammenwirken kann, um die Ablauföffnung 27 zu verschließen. An dem Stempel 31 ist unterhalb der Trennwand 23 ein zweiter Ventilstößel 24 ausgebildet, der mit einem an der Überlauföffnung 24 ausgebildeten Ventilsitz 35 zusammenwirkt. Die Ventilstößel sind derart an dem Stempel 21 ausgebildet, daß in einer ersten angehobenen Stellung des Stempels der Ventilstößel 34 gegen den Ventilsitz 34 anliegt und die Überlauföffnung 24 schließt, während gleichzeitig der Ventilstößel 32 von dem Ventilsitz 33 abgehoben ist, so daß die Auslauföffnung 27 geöffnet ist, während in einer unteren Stellung des Stempels 31 die Auslauföffnung 27 durch den Ventilstößel 32 geschlossen ist, und gleichzeitig die Überlauföffnung 24 durch den Ventilstößel 34 freigegeben ist. Der Stempel 31 ist ferner von einem sich entlang seiner Längsachse erstreckenden Durchgangsrohr 36 durchsetzt, das eine unterhalb des Ventilstößels 32 mündende erste Öffnung 37 aufweist, das eine in Höhe des oberen Teils der Meßkammer 25 liegende zweite Öffnung 38 und eine in den oberen Teil der Einlaufkammer mündende dritte Öffnung 39 aufweist.

Das Steuergehäuse 29 ist über eine Leitung 40 mit einem Magnetventil verbunden, das einerseits eine Einlaßöffnung 42 für atmosphärische Luft hat und andererseits über eine Leitung 43 mit der Einlaufkammer 22 verbunden ist. Das Magnetventil 41 ist derart steuerbar, daß in einer ersten Stellung die Leitung 40 mit der Einlaßöffnung für atmosphärische Luft 42 verbunden ist, während gleichzeitig die Leitung 43 geschlossen wird, während in einer zweiten Stellung die Einlaßöffnung 42 verschlossen ist und eine Verbindung zwischen den Leitungen 40 und 43 hergestellt wird.

In einer Wand der Meßkammer 25 sind Meßelektroden $E_1$ bis $E_n$ angeordnet. Im Abstand vor diesen Elektroden liegt innerhalb der Meßkammer 25 eine Gegenelektrode $E_0$. Die Elektroden und Gegenelektrode sind mit einer gleichen Meßschaltung verbunden, wie sie in Fig. 1 gezeigt ist und die zur besseren übersichtlichkeit bei der vorliegenden Darstellung lediglich schematisch als Meßschaltanordnung 44 dargestellt ist. Die Meßschaltanordnung kann wahlweise unmittelbar über die Leitung 45 mit dem Magnetventil 41 verbunden sein oder es kann statt dessen ein Zeitsteuerkreis 46 vorgesehen sein, der über die Leitungen 47 und 48 das Magnetventil 41 erregt oder entregt hält, und gleichzeitig die Meßschaltanordnung 44 derart steuert, daß jeweils die gerade in der Meßkammer 25 vorhandene Milchmenge bestimmt wird.

Das Gerät kann je nachdem, ob der Zeitsteuerkreis 46 vorgesehen ist oder ob die Meßschaltanordnung 44 unmittelbar mit dem Magnetventil 41 verbunden ist, auf zwei verschiedene Weisen arbeiten: Die erste Arbeitsweise ist wie folgt:

Zu Beginn herrscht über die Milchtransportleitung 28, das Durchgangsrohr 36 mit seinen Öffnungen 37, 38 und 39 sowohl in der Meßkammer wie auch in der Einlaufkammer 22 sowie in dem Milchzulaufrohr 26 Melkvakuum. Das Magnetventil 41 befindet sich in einer Stellung, in der die Leitung 40 mit der Atmosphäre verbunden ist, während die Leitung 43 verschlossen ist. Aufgrund des in dem Steuergehäuse 29 herrschenden Atmosphärendrucks gegenüber dem in der Einlaufskammer 22 herrschenden Unterdruck wird der Stempel 31 entgegen der Kraft der Zugfeder 49, die in dem Steuergehäuse angeordnet ist und auf die Membran 30 eine nach aufwärts gerichtete Zugkraft ausübt, nach abwärts in seine unterste Stellung verstellt. In dieser Stellung liegt der Ventilstößel 32 gegen den Ventilsitz 33 an und verschließt die Ablauföffnung 27, während andererseits die Überlauföffnung 24 geöffnet ist. Die aus dem Zulaufrohr 26 in die Einlaufkammer 22 eingeleitete Milch fließt somit unmittelbar über die Überlauföffnung 24 in die Meßkammer und sammelt sich hierin. Durch den Zeitsteuerkreis 46 wird in vorbestimmten Zeitabständen, die derart gewählt sind, daß auch bei maximalem Milchfluß die Meßkammer nicht bis zur Höhe der Öffnung 38 gefüllt wird, periodisch umgeschaltet. Bei Eintreffen eines ersten Umschaltsignals wird durch die Meßschaltanordnung 44 automatisch die zu diesem Zeitpunkt in der Meßkammer 25 befindliche Milchmenge bestimmt und der Wert gespeichert. Der Umschaltimpuls bewirkt gleichzeitig, daß das Magnetventil 41 umgeschaltet wird, so daß nunmehr die Verbindung der Leitung 40 mit der Atmosphäre unterbrochen und gleichzeitig eine Verbindung mit der Leitung 43 hergestellt wird. Dadurch findet ein Druckausgleich zwischen der Einlaufkammer 22 und dem Steuergehäuse 29 statt, wodurch nunmehr die Membran 30 mit dem daran befestigten Stempel 31 aufgrund der Zugfeder 49 nach aufwärts ausgelenkt wird. Der Stempel 31 nimmt dadurch eine oberste Stellung ein, in der der Ventilstößel 34 gegen den Ventilsitz 34 anliegt und die Überlauföffnung 24 verschließt. Damit wird alle aus der Zuleitung 26 ankommende Milch in der Einlaufkammer 22 gesammelt. Gleichzeitig wird durch die Anhebung des Stempels die Ablauföffnung 27 geöffnet, so daß die Milch aus der Meßkammer 25 über die Milchtransportleitung 28 abfließen kann. Aufgrund des Durchgangsrohres 36 wird sichergestellt, daß auch während des Abfließens der Milch sowohl in der Milchtransportleitung 28 wie in der Meßkammer 25, wie auch in der Einlaufkammer 22 derselbe Druck herrscht, so daß die Milch allein aufgrund ihres Eigengewichts abfließt. Nach einer vorbestimmten Zeit wird durch den Zeitsteuerkreis 46 wieder auf den ursprünglichen Zustand umgeschaltet. Hierdurch wird gleichzeitig ein Signal an die Meßschaltanordnung 44 gegeben, die automatisch die etwa in der Meßkammer 25 zu diesem Zeitpunkt verbliebene Restmilchmenge feststellt. Dieser Wert wird ebenfalls in der Meßschaltanordnung 44 gespeichert, und die Differenz zwischen dem ersten und dem zweiten gespeicherten Wert ergibt die tatsächlich in einer Charge abgeflossene Milchmenge. Durch den Steuerimpuls von dem Zeitsteuerkreis 46 wird, wie gesagt, der erste Zustand des Magnetventils und damit auch bezüglich der Stellung des Stempels 31 hergestellt, so daß nunmehr die in der Einlaufkammer 22 gesammelte Milch in die Meßkammer 25 abfließen kann und dort gesammelt wird. Dieser Ablauf wiederholt sich sodann bis zum Ende des gesamten Melkvorganges. Die Meßschaltanordnung 44 summiert am Ende die bei jeder Charge abgeführte Milchmasse und ermittelt somit die gesamte abgemolkene Milchmasse.

Wird gemäß der zweiten Arbeitsweise statt des Zeitsteuerkreises 46 das Magnetventil 41 unmittelbar mit der Meßschaltanordnung 44 verbunden, so ist die Arbeitsweise ähnlich, jedoch wird in diesem Falle nicht nach vorbestimmten Zeiten periodisch eine Umschaltung bewirkt, vielmehr wird die Meßschaltanordnung 44 so eingestellt, daß sie in kurzen Zeitabständen, die sich gerade in der Meßkammer 25 befindliche Milchmasse mißt. Bei Erreichen einer vorbestimmten Milchmasse wird sodann von der Meßschaltanordnung 44 das entsprechende Umschaltsignal an das Magnetventil 41 gegeben. Damit kann die in der Meßkammer 25 befindliche Milch abfließen. Auch während dieser Zeit wird über die Meßschaltanordnung 44 die Milchmasse in der Meßkammer 25 intermittierend festgestellt. Bei Unterschreiten einer vorbestimmten Milchmasse wird sodann von der Meßschaltanordnung 44 ein erneutes Umschaltsignal auf das Magnetventil 41 gegeben. Damit wird die Ablauföffnung 27 wieder geschlossen, während die Überlauföffnung 24 geöffnet wird. Auch in diesem Falle bestimmt sich die pro Charge abgeflossene Milchmasse aus der von der Meßschaltanordnung 44 festgestellten Differenz. Diese gemessenen Milchmengen werden am Ende des Melkvorganges aufsummiert, um die Gesamtmilchmenge zu erhalten.

Bei dieser erfindungsgemäßen chargenweise messenden Meßvorrichtung bietet sich somit gegenüber den bisher bekannten Vorrichtungen der Vorteil, daß das Chargenvolumen nicht immer gleich sein muß. Die Bestimmung des Umschaltzeitpunktes erfolgt nicht aufgrund eines bei Luft/Milchgemischen nicht definierbaren Milchlevels sondern in Abhängigkeit von entweder der Zeit oder der tatsächlich in der Milchmeßkammer vorhandenen Milchmasse. Auch die nicht abgeflossene Milchmenge bei jeder Charge wird genau mit in Betracht gezogen. Schließlich bleiben auch die Milchmassen nicht unberücksichtigt, die am Ende des Melkvorganges gegebenenfalls nicht mehr ausreichen würden, eine volle Charge zu ergeben, weshalb kein Steuer- bzw. Meßsignal erzeugt würde.

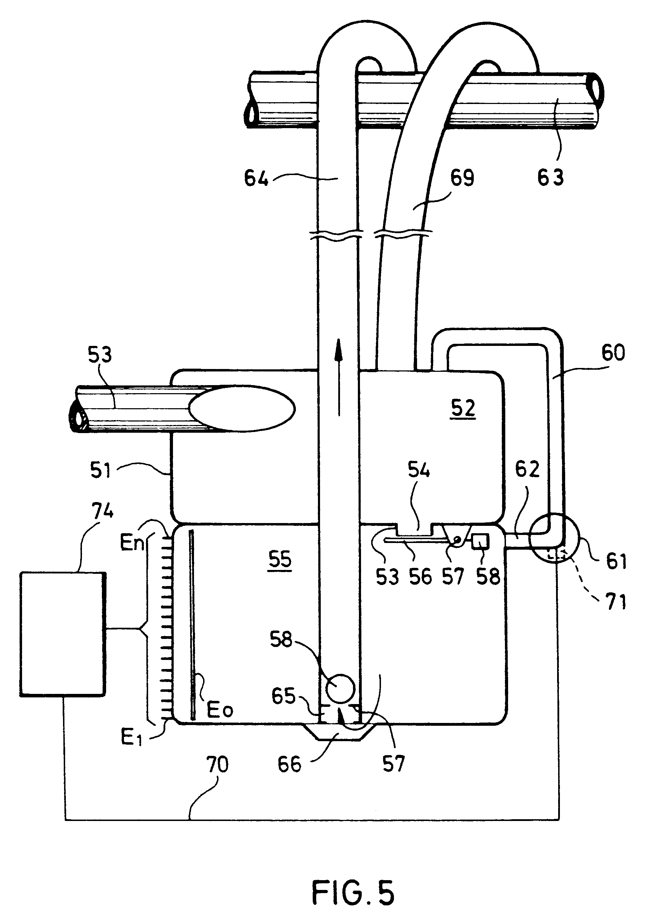

In der Fig. 5 ist eine andere Ausführungsform einer chargenweise messenden Milchmengenmeßvorrichtung 50 gezeigt. In dem Gehäuse 51 ist eine Einlaufkammer 52 und eine darunter liegende und über eine überlauföffnung 54 hiermit in Verbindung stehende Meßkammer 55 vorgesehen. In die Einlaufkammer mündet das Zulaufrohr 53 für die Milch. Die Überlauföffnung 54 ist von unten durch eine Klappe 56 verschlossen, die in Form eines zweiarmigen bei 57 angelenkten Hebels ausgebildet ist, dessen zweiter Hebelarm aus einem Gegengewicht 58 besteht, das die Klappe 56 in Anlage und damit in Schließstellung an einen entsprechenden Ventilsitz 59 an der Überlauföffnung 54 hält.

Die Einlaufkammer 52 ist über eine Leitung 60 mit einem Ventil 61 verbunden, das etwa aus einem Magnetventil bestehen kann, zur Verdeutlichung seiner Funktion jedoch in Form eines Schliffventils mit einem Küken dargestellt ist. Das Ventil selbst ist über eine Leitung 62 mit der Meßkammer 55 verbunden.

Ferner ist bei 63 die Melkleitung angedeutet, über die mit Hilfe eines Unterdrucks die Milch abgeführt wird. In die Melkleitung 63 ragt ein Rohr 64, das mit seinem anderen Ende 65 in eine Vertiefung 66 in dem Boden der Meßkammer 55 vorsteht. An dem Ende 65 ist in dem Rohr selbst ein Rückschlagventil in Form einer unter seinem eigenen Gewicht auf einem Ventilsitz 57 aufsitzenden Kugel 58 vorgesehen.

Schließlich ist die Einlaufkammer 52 über eine weitere Leitung 69 ebenfalls mit der Melkleitung 63 verbunden.

In der Meßkammer sind, wie bei der vorhergehenden Anordnung bereits beschrieben, mehrere Meßelektroden $E_1$ bis $E_n$ vorgesehen, die gegenüber einer gemeinsamen Gegenelektrode $E_0$ angeordnet sind. Die Elektroden sind mit einer Meßschaltanordnung 74 verbunden, die der Meßschaltung entspricht, wie sie in Fig. 1 gezeigt ist. Die Meßschaltanordnung ist über eine elektrische Leitung 70 mit dem Ventil 61, sofern dies ein elektromechanisches Ventil ist, bzw. über eine nicht gezeigte Verstellvorrichtung, sofern es sich um ein mechanisches Ventil handelt, verbunden.

Die Funktionsweise dieser Vorrichtung ist wie folgt:

Zu Beginn stehen die Einlaufkammer 52 und die Meßkammer 55 über die Leitung 69 bzw. 64 unter dem in der Melkleitung 63 herrschenden Melkvakuum. Die aus dem Zulaufrohr 53 in die Einlaufkammer eingeführte

16

Milch öffnet aufgrund ihres Gewichts die Verschlußklappe 56 und gelangt somit in die Meßkammer 55. Die Meßschaltanordnung 74 mißt in zeitlich kurzen Abständen jeweils die sich bereits in der Meßkammer 55 befindende Milchmasse. Wird ein vorbestimmter Wert für diese gemessene Milchmasse erreicht, so wird über die Leitung 70 ein Schaltimpuls an das Ventil 61 gegeben. Das Ventil 61, das in seiner ursprünglichen Stellung eine Verbindung zwischen der Leitung 60 und 62 hergestellt hatte, wird durch diesen Schaltimpuls derart verstellt, daß die Leitung 60 verschlossen und die Leitung 62 mit einem Auslaß 71 zur Atmosphäre hin verbunden wird. Während die Einlaufkammer 52 also weiterhin unter dem Melkvakuum steht, findet in der Meßkammer 55 eine Druckerhöhung auf Atmosphärendruck statt. Damit wird die Ventilklappe 56 gegen ihren Ventilsitz 59 gedrückt und damit die Überlauföffnung 54 verschlossen. Die ab diesem Zeitpunkt in die Überlaufkammer 52 einströmende Milch wird also in dieser gesammelt.

Die Milch in der Meßkammer 55 steht gleichzeitig unter einer Druckdifferenz, nämlich einerseits dem Atmosphärendruck an der Leitung 62 und andererseits dem Melkvakuum, das noch in der Leitung 64 herrscht. Dies führt dazu, daß aufgrund dieser Druckdifferenz die in der Meßkammer 55 befindliche Milch unter Öffnung des Rückschlagventils 57, 58 über das Rohr 64 abgeführt wird. Während dieser Zeit wird weiterhin in kurzen Zeitabständen mit Hilfe der Meßschaltanordnung 74 die Masse der Milch in der Meßkammer 55 bestimmt. Sobald der völlige Abtransport der Milch aus der Meßkammer festgestellt wird, oder sobald die gemessene Milchmasse eine vorbestimmte untere Grenze erreicht, wird von der Meßschaltanordnung 74 ein weiterer Steuerimpuls auf das Ventil 61 gegeben, der dieses in seine ursprüngliche Stellung zurückstellt. Hierdurch wird über die nunmehr verbundenen Leitungen 60 und 62 ein Druckausgleich in der Einlaufkammer 52 und der Meßkammer 55 hergestellt. Auf diese Weise kann erneut Milch aus der Einlaufkammer 52 über die Ventilklappe 56 laufen und der Vorgang wiederholt sich in der vorstehend beschriebenen Weise.

Das Rückschlagventil 57, 58 ist in dem Rohr 64 vorgesehen, um eventuell zurückfließende Milch darin zu hindern, in die Meßkammer 55 zurückzufließen.

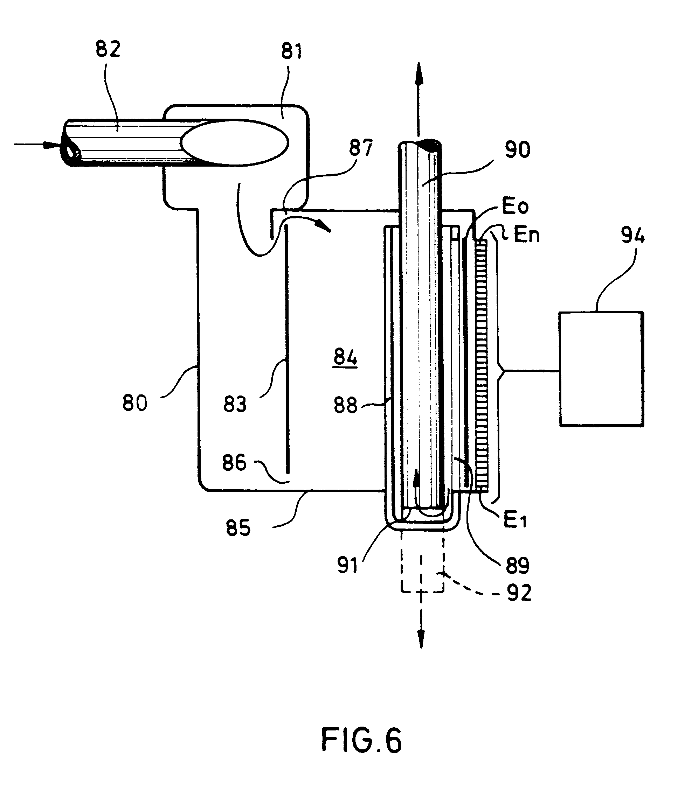

In der Fig. 6 ist eine Ausführungsform gezeigt, mit der der Milchfluß praktisch kontinuierlich gemessen werden kann und durch Aufsummation der so gemessenen Milchflußkurve über die Zeit schließlich die Gesamtmilchmasse bestimmt werden kann, die bei einem Melkvorgang abgemolken worden ist. Die Vorrichtung ist lediglich schematisch dargestellt, um die Aufmerksamkeit nicht von dem eigentlichen Erfindungsgegenstand abzulenken. In einem gemeinsamen Gehäuse 80 ist eine Einlaufkammer 81 vorgesehen, in die die Milch über ein Zulaufrohr 82 tangential eingeführt wird, so daß die Milch bereits weitgehend beruhigt wird. Die Einlaufkammer 81 ist über eine Trennwand 83 von der Meßkammer 84 getrennt. Die Trennwand 83 weist zwischen ihrer Unterseite und dem Boden 85 des Gehäuses 80 und gegebenenfalls an der Seitenwänden einen Übertrittsschlitz 86 für die Milch auf. Der beschränkte Übertritt der Milch über die Schlitze oder über ein Sieb in die Meßkammer 84 dient zur weiteren Beruhigung der Milch. Zwischen dem oberen Ende der Trennwand 83 und dem Gehäuse 80 ist weiterhin eine Öffnung 87 vorgesehen, über die ein ständiger Druckausgleich zwischen den Kammern stattfinden kann.

In der Meßkammer 84 ist ein an seinem unteren Ende verschlossenes und an seinem oberen Ende offenes Rohr 88 vorgesehen, das mit seinem geschlossenen unteren Ende unter den Boden 85 der Meßkammer hinabreicht. Das Rohr 88 weist in seiner Seitenwand einen Längsschlitz 89 auf, der bis zum Boden 85 der Meßkammer reicht. Koaxial zu dem Rohr 88 verläuft im Inneren dieses Rohres und im Abstand zu dessen Innenwand ein weiteres Rohr 90, das an seinem unteren Ende 91 offen ist. Das Rohr 90 ist mit seinem anderen Ende mit einer nicht gezeigten Melkleitung, in der das übliche Melkvakuum herrscht, verbunden. In der Nähe des Schlitzes 89 sind auf verschiedenen Höhenniveaus Elektroden $E_1$ bis $E_n$ angeordnet. Diesen Elektroden gegenüber ist eine Gegenelektrode $E_0$ im Abstand hierzu angeordnet. Die Gegenelektrode $E_0$ wird bevorzugt auf der Außenseite des Rohres 88 angebracht, obwohl die Gegenelektrode in der Fig. 6 freistehend gezeichnet ist. Mit den Elektroden $E_1$ bis $E_n$ ist eine Meßschaltanordnung 94 verbunden, die der Schaltung entspricht, wie sie in der Fig. 1 gezeigt ist.

Der Längsschlitz 89 hat vorzugsweise eine konstante Breite s über seine ganze Höhe. Die Vorrichtung arbeitet wie folgt als Milchflußmesser:

Die ermolkene Milch kommt über das Zulaufrohr 82 in die Einlaufkammer 81 und fließt in dieser abwärts. Über den übertrittsschlitz 86 gelangt die Milch in die Meßkammer 84 und steigt in dieser wegen des Druckausgleiches über die Öffnung 87 auf die gleiche Höhe wie in der Einlaufkammer 81. Gleichzeitig fließt Milch über den Längsschlitz 89 in das Innere des Rohres 88 ab und wird aus diesem über das untere Ende 91 des Rohres 90 zu der Melkleitung hin abgeführt.

Anstelle die Milch über das Rohr 90 nach aufwärts abzuleiten, könnte auch gemäß einer anderen Ausführungsform das Rohr 88 an seinem unteren Ende offen sein und mit einem nach abwärts führenden Melkableitungsrohr 92 in Verbindung stehen.

In kurz aufeinanderfolgenden Zeitabständen werden nun jeweils die Verhältniszahlen $c'_m$ für jedes Höhenniveau m bzw.die betreffende Elektrode auf diesem Höhenniveau ermittelt. Aus diesen jeweils zu einem bestimmten Zeitpunkt für alle Höhenniveaus von 1 bis n gemessenen Verhältniszahlen $c'_m$ läßt sich sodann die effektive Änderung der Milchmasse pro Zeit errechnen nach der folgenden mathematischen Formel:

$$\dot{m}_{eff} = \left( K \cdot \sum_{m=1}^{n} \sqrt{c'_m \cdot \sum_{i=m}^{n} c'_i} \right) \left( 1 - a \sqrt{K \sum_{m=1}^{n} \sqrt{c'_m \sum_{i=m}^{n} c'_i}} \right)$$

worin bedeutet:

$$\dot{m}_{eff} \left[ \frac{g}{sec} \right] =$$

gesamter aus dem Schlitz austretender Massenstrom

$K = d \times s \times \rho \sqrt{2gd}$

$d$ [cm] = Höhenniveauabstand

$$g \left[ \frac{cm}{sec^2} \right] = 981 \frac{cm}{sec^2}$$

$S$ [cm] = Schlitzbreite

$$\rho \left[ \frac{g}{cm^3} \right] =$$

spezifisch Dichte der Flüssigkeit

$n$ = Gesamtzahl der Elektroden

$c'_m$ = gemessene und gegebenenfalls mittels Eichung korrigierte Verhältniszahl zwischen 1 und 0 auf dem Höhenniveau m

$a$ = von Schlitzbreite, Schlitzkante etc. abhängige Konstante der Meßvorrichtung, die sich durch Eichung ermitteln läßt.

D.h., indem der Mikroprozessor MP gemäß Fig. 1 so programmiert wird, daß er für jede Messung der Verhältniszahlen $c'_m$ nach der angegebenen Formel die Änderung der Milchmenge pro Zeit errechnet und speichert, kann zu bestimmten Zeiten der jeweilige Milchfluß bestimmt werden. Zeichnet man diese in zeitlichen Abständen gemessenen Werte für den Milchfluß in Abhängigkeit von der Zeit auf, so erhält man

18

die bekannte Milchflußkurve beim Melken. Durch Summation der Produkte aller gemessenen Milchflußwerte multipliziert mit der Länge der Zeitintervalle zwischen zwei aufeinanderfolgenden Messungen ergibt sodann die gesamte ermolkene Milchmenge.

Zur Eichung dieses Verfahrens wurde ebenso wie bei dem Verfahren, das in Verbindung mit der Ausführungsform nach Fig. 1 erläutert wurde, im Vergleich die tatsächlich während des gesamten Melkzyklus ermolkene Milch gewogen und eine Anpassung wurde durch eine entsprechende Wichtung der Verhältniszahlen erreicht. Es zeigte sich, daß die erhaltenen Messungen dadurch in gute Übereinstimmung mit der durch die Vergleichsmessung festgestellten Milchmenge gebracht werden konnten, daß die jeweils gemessenen Verhältniszahlen $c'_m$ jeweils mit ein und demselben Exponenten zwischen 1 und 2 potenziert wurden. Diese Eichung braucht nur einmal vorgenommen zu werden. Die Parameter bleiben sodann für alle Messungen, auch mit anderen Kühen, Fütterungsverhältnissen usw. konstant.

Gemäß einem Ausführungsbeispiel betrug der Querschnitt des Gefäßes, in dem sich die Milch zu einer bestimmten Höhe staut 35 cm$^2$. Die Höhe des Gefäßes betrug 12 cm. Die einzelnen Elektroden hatten einen Höhenabstand von etwa 1,5 mm. Es wurde insgesamt eine Zahl n = 64 Elektroden übereinander verwendet. Der Abstand zwischen den Elektroden und der Gegenelektrode betrug 3 mm. Die Breite s des Längsschlitzes betrug 3 mm.

Eine vereinfachte Milchflußmessung kann auch dadurch ausgeführt werden, daß im Boden des Meßgefäßes eine kalibrierte Öffnung vorgesehen wird und daß kontinuierlich der hydrostatische Druck der Milch über dieser Öffnung durch Messung der Milchmasse über diesem Höhenniveau ermittelt wird.

Wie anhand der Ausführungsform gemäß der Fig. 1 erläutert wurde, wird bevorzugt eine Bezugsmessung in der Nähe des Bodens des Meßgefäßes ausgeführt. Normalerweise ist bei einem normalen Milchfluß, wie er zu Beginn eines Melkzyklus auftritt, der Boden und auch die erste Meßelektrode praktisch unmittelbar bei Einsetzen des Milchflusses mit Milch bedeckt. Diese wenige Luft ist verhältnismäßig schnell entlüftet. D.h., es wird praktisch nach sehr kurzer Zeit ein Bezugsmeßwert gemessen, der dem Zustand entspricht, in dem entlüftete Milch vorliegt. Nun kann jedoch der Fall eintreten, daß ein Lufteinbruch aufgrund etwa eines schlecht sitzenden Melkzeuges auftritt oder daß zu Beginn eines Melkzyklus mehr Luft in der Milch enthalten ist als an sich einer Messung in entlüfteter Milch entsprechen würde. Nur um diesen Fällen vorzubeugen, wird bevorzugt der Mikroprozessor derart programmiert, daß zunächst ein fester, aufgrund vorhergehender Messungen ermittelter Bezugsmeßwert gespeichert wird, der für die anfänglichen Messungen zur Bildung des Verhältniszahlen $c'_m$ verwendet wird. Gleichzeitig hiermit wird der sich einstellende Bezugsmeßwert auf der Bezugsmeßstrecke gemessen und mit dem festen Bezugsmeßwert verglichen. Sobald der tatsächlich gemessene Bezugsmeßwert mindestens 85% der Größe des fest vorgegebenen Bezugsmeßwertes erreicht, wird für die Messung auf den tatsächlich gemessenen Bezugsmeßwert umgeschaltet. Trotzdem wird auch weiterhin der tatsächlich gemessene Bezugsmeßwert mit dem zu Anfang fest vorgegebenen Bezugsmeßwert verglichen. Sollte sich während der Messung durch etwa einen Lufteinbruch eine wesentliche Änderung von mehr als 15% dieses Werts ergeben, so wird wieder automatisch auf den festen Bezugsmeßwert umgeschaltet. Auf diese Weise kann erreicht werden, daß selbst dann eine verläßliche Messung durchgeführt wird, wenn mit äußerst ungünstigen Luft/Milchverhältnissen gearbeitet wird, wie sie beispielsweise bei extrem hohen Milchflüssen auftreten, bei denen die Durchwirbelung der Milch mit Luft sehr intensiv ist und bei denen die Milch aufgrund der geringen Verweilzeit der Milch in der Meßkammer praktisch nicht entgasen kann, oder wie sie am Ende eines Melkzyklus auftreten können, wo dieselbe Menge Luft mit immer kleiner werdenden Milchmengen vermischt wird.

In den Fig. 7 und 8 sind grafische Darstellungen gezeigt, die praktisch Momentaufnahmen des Schaumprofils bei einer Milchflußmessung zu verschiedenen Zeiten während ein und desselben Melkzyklus einer Kuh darstellen. In den grafischen Darstellungen ist jeweils auf der Abszisse die gemessene Verhältniszahl c′ aufgetragen, während auf der Ordinate in einzelnen Abständen die in der Höhe gegeneinander versetzt angeordneten Meßelektroden aufgezeichnet sind. In der Darstellung sind 64 Elektroden angegeben. Wie bereits oben ausgeführt wurde, vollzieht sich die Gesamtabtastung der Elektroden durch den Multiplexer in einer Zeit in der Größenordnung von etwa 0,1 sec. . Wie aus der Fig. 7 ersichtlich ist, weisen die Elektroden bis zur Höhe der Meßelektrode 10 etwa einen Meßwert der Verhältniszahl c′ von 1 auf. D.h., bis zu dieser Höhe liegt etwa reine bzw. entgaste Milch vor. Die Meßelektroden die darüber liegen, d.h. die Elektroden Nr. 10 bis 40, weisen dagegen bereits eine von 1 abweichende Verhältniszahl auf.

Bei der in Fig. 8 dargestellten Messung zeigen lediglich die untersten Elektroden einen Meßwert der Verhältniszahl c′ von etwa 1. Die darüber liegenden Elektroden 5 bis 60 zeigen jeweils einen kleineren Wert als 1.

Die in den Fig. 7 und 8 dargestellen Kurven zeigen nun sehr deutlich, daß man die in dem Schaum enthaltene Milchmasse bei den Messungen keineswegs einfach vernachlässigen darf, wie es im Stand der

EP 0 315 201 B1

Technik bisher meistens der Fall war. Würde man in beiden Kurven an den Stellen, an denen diese jeweils den Wert c' = 0,9 erreichen, einen Schnitt entsprechend der gezeigten Linie D bzw. D' machen, d.h. an Stellen, an denen man annehmen könnte, daß der in dem Schaum enthaltene Flüssigkeitsanteil etwa der Flüssigkeitsmenge entspricht, der in dem Teil der unter der Schnittlinie D bzw. D' liegenden Milchmenge bereits durch Luft ersetzt ist, so werden die erheblichen Unterschiede des Milchanteils in dem Schaum deutlich.

Bei beiden Kurven trägt der unterhalb der Schnittlinien D bzw. D' liegende Milchanteil an dem Milchfluß durch den Spalt zu 1,53 kg/min. bei. In dem Schaumanteil, der oberhalb von den Schnittlinien D bzw. D' liegt, ist nun äußerst unterschiedlich viel Milchmasse enthalten. Deshalb trägt die Milchmasse in der Fig. 7 lediglich mit 0,37 kg/min. zu dem Milchfluß bei, während die im vergleichbaren Schaumprofil der Fig. 8 enthaltene Milchmenge mit 0,97 kg/min. zu dem Milchfluß beiträgt.

Anhand der Fig. 9 wird eine andere Ausführungsform gemäß der Erfindung beschrieben, bei der als Meßwert nicht der Widerstand der Milch auf der Meßstrecke gemessen wird, sondern die Lichtdurchlässigkeit auf vorbestimmten Höhenniveaus.

Die ermolkene Milch wird in eine insbesondere für Infrarotstrahlen-durchlässige Meßkammer geleitet und in dieser entweder gesammelt oder entsprechend der Meßanordnung der Fig. 6 gestaut. Auf verschiedenen Höhenniveaus entlang einer Seite dieser Meßkammer sind mehrere Lichtquellen (Leuchtdioden) L1 bis Ln angeordnet. Auf entsprechender Höhe sind auf der diesen Leuchtdioden abgewandten Seite der Meßkammer 100 Photodioden $D_1$ bis $D_n$ angeordnet. Die Leuchtdioden werden über eine Treiberschaltung 107 entweder alle gemeinsam angesteuert oder mit Hilfe eines Multiplexers 102' nacheinander. Die Photodioden $D_1$ bis $D_n$ sind über jeweils elektrische Widerstände $W_1$ bis $W_n$ gegen Masse 101 geschaltet. Der an den Widerständen gegen Masse auftretende Spannungsabfall kann über einen Multiplexer 102 abgegriffen werden. Der Multiplexer 102 wird zweckmäßigerweise mit dem Multiplexer 102' synchronisiert. Der Ausgang des Mulitplexers 102 wird über einen Verstärker 103 auf einen Analog/Digital-Wandler 104 gegeben, dessen digitales Ausgangssignal einem Mikroprozessor 105 zugeführt wird. Das durch den Mikroprozessor erhaltene Meßergebnis kann sodann auf einer Anzeigevorrichtung 106 angezeigt werden. Aufeinanderfolgende Messungen können von dem Mikroprozessor 105 gesteuert werden, indem dieser entsprechende Signale über die Leitung 108 an den Multiplexer 102' bzw. über die Leitung 109 an die Treiberschaltung 107 gibt.

Die Arbeitsweise der Meßvorrichtung ist wie folgt:

Zu einer bestimmten Zeit gibt der Mikroprozessor 105 ein Steuersignal an den Treiber 107, der über eine entsprechende Schaltung eine Spannung an alle Leuchtdioden $L_1$ bis $L_n$ anlegt. Gleichzeitig wird über die Leitung 108 ein entsprechendes Startsignal an den Multiplexer 102' gegeben. Durch diesen werden in vorbestimmten Zeitabständen die Leuchtdioden $L_1$ bis $L_n$ aufeinanderfolgend in ihren lichtemittierend Zustand geschaltet. Das von den Leuchtdioden abgegebene Licht, es handelt sich bevorzugt um Leuchtdioden, die ein Infrarotlicht erzeugen, wird durch die Milch in dem Meßgefäß 100 entsprechend dem auf der Meßstrecke zwischen einer Leuchtdiode $L_m$ und der zugehörigen Photodiode $D_m$ liegenden Luft/Milchmischung absorbiert. Entsprechend trifft, wenn lediglich Luft vorhanden ist, eine größere Lichtmenge auf die zugehörige Photodiode als wenn reine Milch vorliegt. Entsprechend der jeweiligen Beleuchtungsstärke einer Photodiode wird von dieser ein Storm erzeugt, der an dem zugehörigen Widerstand $W_m$ einen entsprechenden Spannungsabfall gegen Masse 101 erzeugt. Da der Multiplexer 102 synchron zu dem Multiplexer 102' arbeitet, wird der Spannungsabfall an einem Widerstand $W_m$ zur selben Zeit gemessen, wie die zugehörige Leuchtdiode $L_m$ erregt wird. Die jeweils gemessenen Spannungsabfälle werden über den Multiplexer 102 und den Verstärker 103 auf den Analog/Digital-Wandler 104 gegeben und von diesem als digitalisiertes Signal an den Mikroprozessor 105 weitergeleitet. Dieser speichert die gemessenen Spannungsabfälle bzw. Spannungswerte $U_1$ bis $U_n$. Wie bereits bei der Meßanordnung nach der Fig. 1 wird der Meßwert, der auf der dem Boden des Meßgefäßes 100 am nächsten liegenden Höhenniveau gemessen wird, das ist die Meßstrecke zwischen der Leuchtdiode $L_1$ und der Photodiode $D_1$, als Bezugsmeßwert $U_1$ = $V_0$ genommen und gespeichert. Sodann wird in dem Mikroprozessor jeweils für jede Meßstrecke auf jedem Höhenniveau 1 bis n vorzugsweise das Verhältnis

$$c = \frac{U_0}{U_m}$$

20

gebildet. Diese Bruchteilswerte stellen die bereits oben beschriebene Verhältniszahl c dar. Die übrige Weiterverarbeitung dieser Verhältniszahl und die Messung der Gesamtmilchmenge bzw. des Milchflusses erfolgt auf dieselbe Weise wie bei dem Ausführungsbeispiel gemäß der Fig. 1.

In den Fig. 10 und 11 ist eine Ausführungsform dargestellt, mit der die Anordnung der Leuchtdioden (Lichtquellen) $L_1$ bis $L_n$ bei sonst gleicher Schaltanordnung durch eine Lichtquelle ersetzt werden kann. Die in den Fig. 10 und 11 gezeigte Ausführungsform dient lediglich dazu, auf den einzelnen Höhenniveaus aufeinanderfolgend Lichtsignale zu erzeugen, die sodann nach Durchtritt durch die Meßkammer 100 von den Photodioden $D_1$ bis $D_n$ empfangen werden.

Insbesondere aus Fig. 11 ist das Meßgefäß 115 zu ersehen, in das ein Rohr 116 aufrecht vorsteht, in dem ein senkrechter Längsschlitz 117 ausgebildet ist. Über dieses Rohr 116 fließt die über nicht gezeigte andere Zuleitungsrohre zugeflossene Milch ab. Das Meßgefäß 115 hat einen nach außen vorspringenden Ansatz aus einem strahlendurchlässigen Material ähnlich einer Füllstandshöhenanzeige. Die sich einander gegenüberliegenden Seitenwände 118 und 119 begrenzen jeweils die Meßstrecke durch die Milch. Entlang der Seitenwand 119 sind in der Höhe übereinander die Photodioden $D_1$ bis $D_n$ angeordnet, wie es am besten aus Fig. 10 zu ersehen ist. Über der Meßkammer ist ein Laser 110 angeordnet, dessen Strahl auf einen drehbaren Spiegel 112 fällt. Der Spiegel 112 ist über einen Verstellmotor 113 in seiner Winkelstellung verstellbar. Unterhalb des Drehspiegels 112 sowie des Lasers 110 ist eine reflektierende Fläche 114, die Teil eines Parabolspiegels ist, angeordnet. Diese reflektierende Fläche 114 ist derart in bezug auf den Auftreffpunkt 122 des Laserstrahls 121 auf den Drehspiegel 112 angeordnet, daß dieser Auftreffpunkt im Fokus des Parabolspiegels 114 liegt. Dementsprechend wird der Laserstrahl 121 jeweils entsprechend der Drehstellung des Spiegels 112 in verschiedene Richtungen, etwa entsprechend den Strahlen 123, 124 bzw. 125, abgelenkt, die jeweils nach Reflexion an dem Parabolspiegel 114 in zueinander parallele Strahlen umgelenkt werden, die entsprechend der vorgesehenen Anordnung parallel zueinander verlaufen und auf entsprechenden Höhenniveaus $h_1$, $h_m$ und $h_n$ liegen. D.h., durch gesteuerte Drehung des Spiegels 112 kann aufeinanderfolgend eine entsprechender Lichtstrahl auf den einzelnen Höhenniveaus erzeugt werden. Das auf der jeweiligen Meßstrecke etwa durch Absorption oder Streuung gedämpfte Licht wird sodann von den dem jeweiligen Höhenniveau zugeordneten Photodioden $D_1$ bis $D_n$ empfangen. Die Weiterverarbietung dieser Signale erfolgt durch eine Meß- und Schaltanordnung wie in der Fig. 9. (Anstelle der Spiegelanordnung könnte das Licht auch durch eine Lichtleitanordnung aus Glasfasern auf die Höhenniveaus eingestrahlt werden.)

In Fig. 12 ist eine Ausführungsform dargestellt, bei der mit Hilfe der sich aufgrund des Luftanteils in der Milch ändernden Wärmeleitfähigkeit ein dem Milch/Luftverhältnis entsprechender Wert gemessen werden kann.

In ein Meßgefäß 130 stehen in der Höhe gegeneinander versetzt angeordnete PTC-Temperatursensoren vor. Mit diesen sind Konstantstromquellen 132 verbunden, deren Heizleistung über Stellglieder 138, 139 regulierbar ist. Die sich an jedem PTC-Temperatursensor einstellende Temperatur ist über einen Multiplexer 133 abtastbar und die hiervon erhaltenen Signale sind über einen Verstärker 134 und einen Analog/Digital-Wandler einem Mikroprozessor 136 zuführbar. Das Meßergebnis des Mikroprozessor kann auf einer Anzeige 137 angezeigt werden. Die Stellglieder 138, 139 zur Regulierung der Heizleistung sind über den Mikroprozessor 136 steuerbar.

Die Vorrichtung arbeitet derart, daß etwa den übereinanderliegenden Temperatursensoren 2 bis n eine von den Stellgliedern 138, 139 gesteuerte konstante Heizleistung zugeführt wird, während dem ersten, auf dem ersten Höhenniveau bzw. in der Nähe des Bodens des Meßgefäß liegenden PTC-Temperatursensor kein Heizstrom zugeführt wird. Nach vorübergehender Abschaltung der konstanten Heizleistung eines Temperatursensors wird dessen Temperatur durch Messung des Widerstandswertes eines zugeordneten Widerstandes gemessen. Daraus läßt sich die entsprechende Temperatur des Temperatursensors errechnen. Diese Temperatur wird mit der Temperatur des Temperatursensors 1 verglichen. Die entsprechend der jeweiligen Temperatur gemessenen Widerstände werden jeweils in das Verhältnis gesetzt zu dem Widerstand des unbeheizten Temperatursensors. Daraus läßt sich in bereits beschriebener Weise die jeweilige Verhältniszahl c für jeden Temperatursensor auf jedem Höhenniveau ermitteln.

## Patentansprüche

1. Verfahren zur Durchführung von Messungen an mit Gas versetzten, schäumenden Flüssigkeiten, bei dem an der in einem Gefäß enthaltenen, schäumenden Flüssigkeit in mehreren unterschiedlichen Höhenniveaus (m) jeweils ein durch einen von dem Gasanteil abhängigen Parameter der Flüssigkeit bestimmter Meßwert ($I_m$) gemessen wird, **dadurch gekennzeichnet,** daß zur Messung der spezifischen Dichte der schäumenden Flüssigkeit in Abhängigkeit von der Höhe auf den verschiedenen Höhenniveaus (m) auf einer im wesentlichen entgaste Flüssigkeit der zu messenden schäumenden Flüssigkeit enthaltenden Bezugsmeßstrecke ein Bezugsmeßwert ($I_0$) des gleichen Parameters gemessen wird, daß in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert ($I_0$) und dem Meßwert ($I_m$) auf diesem Höhenniveau oder dem Kehrwert dieses Verhältnisses gebildet wird, so daß die Verhältniszahl ($c'_m$) für entgaste Flüssigkeit gleich 1 und für Luft im wesentlichen gleich Null ist, und daß jede Verhältniszahl ($c'_m$) mit dem Wert für die spezifische Dichte ($\rho$) der entgasten Flüssigkeit multipliziert wird.

2. Verfahren zur Durchführung von Messungen an mit Gas versetzten, schäumenden Flüssigkeiten, insbesondere zum Messen an mit Luft versetzter Milch, bei dem an der in einem Gefäß enthaltenen, schäumenden Flüssigkeit in mehreren unterschiedlichen Höhenniveaus (m) jeweils ein durch einen von dem Gasanteil abhängigen Parameter der Flüssigkeit bestimmter Meßwert ($I_m$) gemessen wird, **dadurch gekennzeichnet,** daß auf den verschiedenen Höhenniveaus (m) auf einer im wesentlichen entgaste Flüssigkeit der zu messenden schäumenden Flüssigkeit enthaltenden Bezugsmeßstrecke ein Bezugsmeßwert ($I_0$) des gleichen Parameters gemessen wird, daß in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert ($I_0$) und dem Meßwert ($I_m$) auf diesem Höhenniveau oder dem Kehrwert dieses Verhältnisses gebildet wird, so daß die Verhältniszahl ($c'_m$) für entgaste Flüssigkeit gleich 1 und für Luft im wesentlichen gleich Null ist, daß jeweils das zwischen einem Höhenniveau und dem nächst unteren Höhenniveau bzw. dem Boden des Gefäßes liegende Volumen ($V_m$) bestimmt wird, daß jeweils das Produkt ($c'_m \times \rho \times V_m$) aus dem unterhalb eines Höhenniveaus liegenden Volumen ($V_m$), der für dieses Höhenniveau bestimmten Verhältniszahl ($c'_m$) und der spezifischen Dichte der Milch ($\rho$) gebildet wird, und daß zur Bestimmung der gesamten Flüssigkeitsmasse (G) die Summe aller so gebildeter Produkte über alle Höhenniveaus (n) gebildet wird entsprechend

$$G = \sum_{m=1}^{n} c'_m \times V_m \times \rho \quad .$$

3. Verfahren nach Anspruch 2 zum Messen einer Milchmasse, bei dem die Milchmasse chargenweise bestimmt wird, indem Milch fortlaufend in ein Meßgefäß laufen gelassen wird und die Zufuhr der Milch unterbrochen wird, wenn ein vorbestimmter Meßwert erreicht wird, und die Milch sodann vollständig oder bis zum Erreichen eines zweiten vorbestimmten Meßwertes ausfließen gelassen wird, bevor der Vorgang wiederholt wird, **dadurch gekennzeichnet,** daß während des Zulaufs der Milch in das Meßgefäß fortlaufend die Milchmasse bestimmt wird, und der Zufluß der Milch bei Erreichen einer vorgegebenen ersten Milchmasse unterbrochen wird, daß während des Ausfließens der Milch fortlaufend die Milchmasse in dem Milchgefäß bestimmt wird, daß der Abfluß der Milch bei Erreichen einer vorgegebenen zweiten Milchmasse unterbrochen wird, daß die Differenz aus der ersten und zweiten Milchmasse zur Bestimmung der Milchmasse pro Charge gebildet wird, daß der Vorgang bis zum Ende des Milchflusses in einem Melkzyklus wiederholt wird, daß die Milchmasse entsprechend der Zahl der Chargen errechnet wird, und daß die in dem Meßgefäß am Ende des Melkzyklus angesammelte Milchmasse bestimmt und zu der bereits errechneten Milchmasse hinzuaddiert wird.

4. Verfahren nach Anspruch 3, **dadurch gekennzeichnet,** daß die Milch nach Erreichen einer vorgegebenen ersten Milchmasse in dem Meßgefäß ausfließen gelassen wird, daß am Ende die in dem Schaum etwa zurückgebliebene Milchmasse bestimmt wird und daß zur Bestimmung der Milchmasse pro Charge die Differenz zwischen der ersten vorgegebenen Milchmasse und der Restmilchmasse in dem Schaum gebildet wird.

5. Verfahren nach Anspruch 2, **dadurch gekennzeichnet,** daß die in einem Milchzyklus ermolkene Milch in ein Meßgefäß geleitet wird, daß in vorbestimmten Zeitintervallen die Zufuhr der Milch unterbrochen und die in dem Meßgefäß zu diesem Zeitpunkt vorhandene Milchmasse bestimmt wird, daß diese Milchmasse als eine Charge aus dem Milchgefäß abgeführt wird, bevor der Zulauf in das Milchgefäß erneut geöffnet wird, und daß die in den einzelnen Chargen gemessenen Milchmasse bis zum Ende des Milchflusses aufsummiert werden.

6. Verfahren nach Anspruch 2, **dadurch gekennzeichnet,** daß die in einem Melkzyklus ermolkene Milch in ein Meßgefäß geleitet wird, daß bei Erreichen einer vorbestimmten Milchmasse oder in vorbestimmten Zeitintervallen die Milch aus dem Meßgefäß als Charge abgefüllt wird und daß die in den einzelnen Chargen gemessenen Milchmassen bis zum Ende des Milchflusses aufsummiert werden.

7. Verfahren zur Durchführung von Messungen an mit Gas versetzten, schäumenden Flüssigkeiten, insbesondere von Messungen an mit Luft versetzter Milch, bei dem an der in einem Gefäß enthaltenen, schäumenden Flüssigkeit in mehreren unterschiedlichen Höhenniveaus (m) jeweils ein durch einen von dem Gasanteil abhängigen Parameter der Flüssigkeit bestimmter Meßwert ($I_m$) gemessen wird, **dadurch gekennzeichnet,** daß auf den verschiedenen Höhenniveaus (m) auf einer im wesentlichen entgaste Flüssigkeit der zu messenden schäumenden Flüssigkeit enthaltenden Bezugsmeßstrecke ein Bezugsmeßwert ($I_0$) des gleichen Parameters gemessen wird, daß in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert ($I_0$) und dem Meßwert ($I_m$) auf diesem Höhenniveau oder dem Kehrwert dieses Verhältnisses gebildet wird, so daß die Verhältniszahl ($c'_m$) für entgaste Flüssigkeit gleich 1 und für Luft im wesentlichen gleich Null ist, daß dem Gefäß Flüssigkeit zugeführt wird, daß kontinuierlich Flüssigkeit über eine kalibrierte Öffnung abfließt, daß die über dem Höhenniveau der kalibrierten Öffnung liegende Flüssigkeitsmasse gemessen wird, indem jeweils das zwischen einem Höhenniveau und dem nächst unteren Höhenniveau bzw. dem Boden des Gefäßes liegende Volumen ($V_m$) bestimmt wird, daß jeweils das Produkt ($c'_m \times \rho \times V_m$) aus dem unterhalb eines Höhenniveaus liegenden Volumens ($V_m$), der für dieses Höhenniveau bestimmten Verhältniszahl ($c'_m$) und der spezifischen Dichte der Milch ($\rho$) gebildet wird, und daß die gesamte über dem Höhenniveau der kalibrierten Öffnung liegende Flüssigkeitsmasse (G) als die Summe aller so gebildeten Produkte für die über der kalibrierten Öffnung liegenden Höhenniveaus (n) gebildet wird entsprechend

$$G = \sum_{m=1}^{n} c'_m \times V_m \times \rho \quad ,$$

und daß aufgrund der über dem Höhenniveau der kalibrierten Öffnung gemessenen Flüssigkeitsmasse (G) und des sich daraus ergebenden hydrostatischen Drucks der über die kalbirierte Öffnung abfließende Flüssigkeitsfluß berechnet wird.

8. Verfahren nach einem der Ansprüche 1 bis 7, **dadurch gekennzeichnet,** daß die Höhenniveaus in gleichen gegenseitigen Höhenabständen vorgesehen werden.

9. Verfahren zur Durchführung von Messungen an mit Gas versetzten schäumenden Flüssigkeiten, insbesondere an mit Luft versetzter Milch, bei dem an der in einem Gefäß enthaltenen, schäumenden Flüssigkeit in mehreren unterschiedlichen Höhenniveaus (m) jeweils ein durch einen von dem Gasanteil abhängigen Parameter der Flüssigkeit bestimmter Meßwert ($I_m$) gemessen wird, **dadurch gekennzeichnet,** daß in der schäumenden Flüssigkeit auf den verschiedenen Höhenniveaus (m) auf einer im wesentlichen entgaste Flüssigkeit der zu messenden schäumenden Flüssigkeit enthaltenden Bezugsmeßstrecke ein Bezugsmeßwert ($I_0$) des gleichen Parameters gemessen wird, daß in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert ($I_0$) und dem Meßwert ($I_m$) auf diesem Höhenniveau oder dem Kehrwert dieses Verhältnisses gebildet wird, so daß die Verhältniszahl ($c'_m$) für

die entgaste Flüssigkeit gleich 1 und für Luft im wesentlichen gleich Null ist, daß die Höhenniveaus jeweils einen gleichen Abstand (d) voneinander aufweisen, daß dem Gefäß Flüssigkeit zugeführt wird, daß kontinuierlich Flüssigkeit über einen im wesentlichen senkrechten Schlitz aus dem Gefäß abfließt, und daß die durch den Meßschlitz pro Zeit abfließende Flüssigkeitsmasse bestimmt wird aus der Gleichung

$$\dot{m}_{eff} = \left[ K \cdot \sum_{m=1}^{n} \sqrt{c'_m \cdot \sum_{i-m}^{n} c'_i} \right] \left[ 1 - a \sqrt{K \sum_{m=1}^{n} \sqrt{c'_m \sum_{i=m}^{n} c'_i}} \right],$$

worin bedeuten:

$$\dot{m}_{eff} \left| \frac{g}{sec} \right| =$$

gesamter aus dem Schlitz austretender Massenstrom

$K = d \times s \times \rho \sqrt{2gd}$

$d$ [cm] = Höhenniveauabstand

$$g \left[ \frac{cm}{sec^2} \right] = 981 \frac{cm}{sec^2}$$

$S$ [cm] = Schlitzbreite

$$\rho \left[ \frac{g}{cm^3} \right] =$$

spezifisch Dichte der Flüssigkeit

$n$ = Gesamtzahl der Höhenniveaus

$c'_m$ = Verhältniszahl zwischen 1 und 0 auf dem Höhenniveau m

$a$ = von Schlitzbreite, Schlitzkante etc. abhängige, durch Eichung ermittelte Konstante der Meßvorrichtung.

10. Verfahren nach Anspruch 1, 2, 7 oder 9, **dadurch gekennzeichnet,** daß aus der Verhältsniszahl ($c'_m$) durch eine entsprechende vorhergehende Eichung eine korrigierte Verhältniszahl gebildet wird.

11. Verfahren nach Anspruch 9 oder 10, **dadurch gekennzeichnet,** daß der Milchfluß während eines Melkzyklus in konstanten Zeitabständen gemessen wird und daß zur Bestimmung der ermolkenen

24

Gesamtmilchmenge die Summe aus jeweils den Produkten aus dem Milchflußwert und der Zeit zwischen aufeinanderfolgenden Messungen gebildet wird.

12. Verfahren nach einem der Ansprüche 1 bis 11, **dadurch gekennzeichnet,** daß der Bezugsmeßwert auf oder unmittelbar über dem Boden des Gefäßes gemessen wird.

13. Verfahren nach einem der Ansprüche 1 bis 11, **dadurch gekennzeichnet,** daß die auf dem ersten Höhenniveau über dem Boden des Gefäßes liegende Meßstrecke gleichzeitig als Bezugsmeßstrecke dient.

14. Verfahren nach einem der Ansprüche 1 bis 13, **dadurch gekennzeichnet,** daß Messungen des elektrischen Widerstandes oder des elektrischen Leitwertes als zu messender Parameter auf jedem Höhenniveau durchgeführt werden.

15. Verfahren nach einem der Anspruch 1 bis 13, **dadurch gekennzeichnet,** daß Messungen der Lichtdurchlässigkeit oder Absorption von IR-Strahlung als zu messender Parameter auf jedem Höhenniveau durchgeführt werden.

16. Verfahren nach einem der Ansprüche 1 bis 13, **dadurch gekennzeichnet,** daß Messungen der Wärmeleitung als zu messender Parameter auf jedem Höhenniveau durchgeführt werden.

17. Verfahren nach einem der Ansprüche 1 bis 16, **dadurch gekennzeichnet,** daß zur Eichung alle gemessenen Verhältniszahlen ($c'_m$) mit ein und demselben Exponenten größer 0 zur Bildung von korrigierten Verhältniszahlen potentziert werden.

18. Verfahren nach einem der Ansprüche 1 bis 17, **dadurch gekennzeichnet,** daß zur Vermeidung von durch unterschiedliche Verhältnisse auf den einzelnen Meßstrecken bedingten Fehlern Messungen mit einer für alle Meßstrecken gleichen Eichflüssigkeit ausgeführt werden, daß aus den erhaltenen Meßwerten ein Mittelwert gebildet wird, und daß der Meßwert jeder Meßstrecke mit einem entsprechend der Abweichung ihres Meßwertes von dem Mittelwert berechneten Korrekturfaktor gewichtet wird.

19. Verfahren nach einem der Ansprüche 1 bis 18, **dadurch gekennzeichnet,** daß die Abtastung der Meßwerte auf allen Höhenniveaus jeweils in einer Zeit von weniger als 1 Sekunde, vorzugsweise von weniger als 0,5 Sekunden, und bevorzugt in einer Zeit von 0,1 Sekunden, erfolgt.

20. Vorrichtung zur Durchführung von Messungen an mit Gas versetzten schäumenden Flüssigkeiten, insbesondere an Milch/Luft-Gemischen, mit einem Gefäß (1) sowie wenigstens einer Meßvorrichtung ($E_0$ bis $E_n$), mit der bzw. denen in mehreren unterschiedlichen Höhenniveaus (m) des Gefäßes jeweils ein durch einen von dem Gas abhängigen Parameter der in dem Gefäß enthaltenen Flüssigkeit bestimmter Meßwert ($I_m$) meßbar ist, **dadurch gekennzeichnet,** daß zur Messung der spezifischen Dichte der schäumenden Flüssigkeit in Abhängigkeit von der Höhe auf den verschiedenen Höhenniveaus eine im wesentlichen entgaste Flüssigkeit der zu messenden schäumenden Flüssigkeit enthaltende Bezugsmeßstrecke ($E_0$, $E_1$) vorgesehen ist, daß eine Vorrichtung (MP) vorgesehen ist, die in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert und dem Meßwert auf diesem Höhenniveau oder entsprechend dem Kehrwert dieses Verhältnisses bildet, so daß die Verhältniszahl ($c'_m$) für entgaste Flüssigkeit gleich 1 und für Luft im wesentlichen gleich Null ist, und daß ein Multiplikationsglied vorgesehen ist, mit dem jede Verhältniszahl ($c'_m$) mit dem Wert für die spezifische Dichte ($\rho$) der entgasten Flüssigkeit multipliziert wird.

21. Vorrichtung zur Durchführung von Messungen an mit Gas versetzten, schäumenden Flüssigkeiten, insbesondere an Milch/Luft-Gemischen, mit einem Gefäß (1) sowie wenigstens einer Meßvorrichtung ($E_0$ bis $E_n$), mit der bzw. denen in mehreren unterschiedlichen Höhenniveaus (m) des Gefäßes (1, 100, 130) jeweils ein durch einen von dem Gasanteil abhängigen Parameter der in dem Gefäß enthaltenen Flüssigkeit bestimmter Meßwert ($I_m$) meßbar ist, **dadurch gekennzeichnet,** daß auf den verschiedenen Höhenniveaus eine im wesentlichen entgaste Flüssigkeit der zu messenden schäumenden Flüssigkeit enthaltende Bezugsmeßstrecke ($E_0$, $E_1$) vorgesehen ist, daß eine Vorrichtung (MP) vorgesehen ist, die in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert und dem Meßwert auf diesem Höhenniveau oder entsprechend dem Kehrwert dieses Verhältnisses bildet, so daß die Verhältniszahl ($c'_m$) für entgaste Flüssigkeit gleich 1 und für Luft im wesentlichen gleich Null ist, und daß ein Multiplikationsglied vorgesehen ist, mit dem jede Verhältniszahl ($c'_m$) mit dem Wert für die spezifische Dichte ($\rho$) der entgasten Flüssigkeit und mit der Größe des zwischen diesem Höhenniveau und dem darunterliegenden Höhenniveau eingeschlossenen Volumen ($V_m$) in dem Gefäß multipliziert wird, so daß das Produkt ($c'_m \times V_m \times \rho$) gebildet wird, und daß eine Addiervorrichtung (MP) zum Addieren der für alle Höhenniveaus (n) gebildeten Produkte zur Angabe der Gesamtflüssigkeitsmasse (G) als

$$G = \sum_{m=1}^{n} c'_m \times V_m \times \rho$$

vorgesehen ist.

22. Vorrichtung nach Anspruch 21, **dadurch gekennzeichnet,** daß die Meßvorrichtung an einer Meßkammer einer chargenweise messenden Meßvorrichtung vorgesehen ist.

23. Vorrichtung zur Durchführung von Messungen an mit Gas versetzten schäumenden Flüssigkeiten, insbesondere an Milch/Luft-Gemischen, mit einem Gefäß (1, 100, 130) sowie wenigstens einer Meßvorrichtung ($E_0$ bis $E_n$), mit der bzw. denen in mehreren unterschiedlichen Höhenniveaus (m) des Gefäßes jeweils ein durch einen von dem Gasanteil abhängigen Parameter der in dem Gefäß enthaltenen Flüssigkeit bestimmter Meßwert ($I_m$) meßbar ist, **dadurch gekennzeichnet,** daß auf den verschiedenen Höhenniveaus mit jeweils gleichem Höhenniveauabstand (d) eine im wesentlichen entgaste Flüssigkeit der zu messenden schäumenden Flüssigkeit enthaltende Bezugsmeßstrecke ($E_0$ bis $E_1$) vorgesehen ist, daß eine Vorrichtung vorgesehen ist, die in Abhängigkeit davon, ob ein in Luft gemessener entsprechender Meßwert ($I_L$) größer oder kleiner als der auf der Bezugsmeßstrecke erhaltene Bezugsmeßwert ($I_0$) ist, für jedes Höhenniveau eine Verhältniszahl ($c'_m$) entsprechend dem Verhältnis aus dem Bezugsmeßwert und dem Meßwert auf diesem Höhenniveau oder entsprechend dem Kehrwert dieses Verhältnisses bildet, so daß die Verhältniszahl ($c'_m$) für entgaste Flüssigkeit gleich 1 und für Luft im wesentlichen gleich Null ist, daß die Flüssigkeit dem Gefäß zugeführt wird und Flüssigkeit kontinuierlich über einen im wesentlichen senkrechten Schlitz abfließt und Meßwerte der Verhältniszahl ($c'_m$) auf den verschiedenen Höhenniveaus (m) in bezug auf den Schlitz bestimmt werden, und daß eine Rechenvorrichtung (MP) vorgesehen ist, die die Größe des Flüssigkeitsflusses aus der Gleichung

$$\dot{m}_{eff} = \left[ K \cdot \sum_{m=1}^{n} \sqrt{c'_m \cdot \sum_{i=m}^{n} c'_i} \right] \left[ 1 - a \sqrt{K \sum_{m=1}^{n} \sqrt{c'_m \sum_{i=m}^{n} c'_i}} \right],$$

bestimmt, worin bedeuten:

$$\dot{m}_{eff} \left[ \frac{g}{sec} \right] =$$

gesamter aus dem Schlitz austretender Massenstrom
$K = d \times s \times \rho \sqrt{2gd}$

d [cm] = Höhenniveauabstand

$$g \left[ \frac{cm}{sec^2} \right] = 981 \frac{cm}{sec^2}$$

S [cm] = Schlitzbreite

$$\varsigma \left[ \frac{g}{cm^3} \right] =$$

spezifisch Dichte der Flüssigkeit

n = Gesamtzahl der Höhenniveaus

$c'_m$ = Verhältniszahl zwischen 1 und 0 auf dem Höhenniveau m

a = von Schlitzbreite, Schlitzkante etc. abhängige, durch Eichung ermittelte Konstante der Meßvorrichtung.

24. Vorrichtung nach nach einem der Ansprüche 20, 21 oder 23, **dadurch gekennzeichnet,** daß die Bezugsmeßstrecke auf oder unmittelbar über dem Boden des Gefäßes eingerichtet ist.

25. Vorrichtung nach einem der Ansprüche 20 bis 23, **dadurch gekennzeichnet,** daß die Bezugsmeßstrecke auf dem unmittelbar über dem Boden des Gefäßes liegenden Höhenniveau angeordnet ist, und daß der Meßwert auf diesem Höhenniveau als Bezugsmeßwert dient.

26. Vorrichtung nach einem der Ansprüche 20 bis 25, **dadurch gekennzeichnet,** daß das Gefäß (1, 100, 130) aus einem zylindrischen Gefäß besteht.

27. Vorrichtung nach einem der Ansprüche 20 bis 26, **dadurch gekennzeichnet,** daß die Höhenniveaus (m) gleiche Höhenabstände (d) voneinander haben.

28. Vorrichtung nach einem der Ansprüche 20 bis 27, **dadurch gekennzeichnet,** daß an dem Gefäß (1) auf jedem Höhenniveau eine Elektrode ($E_1$ bis $E_n$) angeordnet ist und daß eine gemeinsame Gegenelektrode ($E_0$) oder gegenüber jeder Elektrode eine Gegenelektrode vorgesehen ist.

29. Vorrichtung nach Anspruch 28, **dadurch gekennzeichnet,** daß das Gerät zur Bestimmung des elektrischen Leitwerts oder des elektrischen Widerstandes auf der Meßstrecke ausgelegt ist.

30. Vorrichtung nach einem der Ansprüche 28 oder 29, **dadurch gekennzeichnet,** daß an der Meßstrecke eine Wechselspannung anliegt.

31. Vorrichtung nach Anspruch 30, **dadurch gekennzeichnet,** daß eine sinusförmige oder dreiecksförmige Wechselspannung anlegbar ist.

32. Vorrichtung nach einem der Ansprüche 28 bis 31, **dadurch gekennzeichnet,** daß zur Verhinderung eines Gleichstromanteils zwischen die Spannungsquelle (4) und die gemeinsame Gegenelektrode ($E_0$) oder die Gegenelektroden ein Entkopplungskondensator (6) geschaltet ist.

**33.** Vorrichtung nach einem der Ansprüche 30 bis 32, **dadurch gekennzeichnet,** daß die Meßvorrichtung mit einer Meßfrequenz zwischen 200 Hz und 80 kHz und bevorzugt mit einer Frequenz von 2 kHz betreibbar ist.

**34.** Vorrichtung nach einem der Ansprüche 28 bis 33, **dadurch gekennzeichnet,** daß die Elektroden ($E_1$ bis $E_n$) im wesentlichen kreisförmig sind und einen Durchmesser von etwa 0,5 bis 1,2 mm und vorzugsweise von 0,8 mm haben.

**35.** Vorrichtung nach einem der Ansprüche 28 bis 34, **dadurch gekennzeichnet,** daß die Elektroden ($E_1$ bis $E_n$) in einem Höhenabstand von 1 bis 8 mm, vorzugsweise von 1,5 mm angeordnet sind.

**36.** Vorrichtung nach einem der Ansprüche 28 bis 35, **dadurch gekennzeichnet,** daß der Abstand zwischen den Elektroden ($E_1$ bis $E_n$) und der Gegenelektrode ($E_0$) zwischen 2 und 150 mm und vorzugsweise bei 4 mm liegt.

**37.** Vorrichtung nach einem der Ansprüche 20 bis 27, **dadurch gekennzeichnet,** daß auf jedem Höhenniveau eine Lichtquelle ($L_1$ bis $L_n$), vorzugsweise LED's, vorgesehen sind, mit deren Hilfe ein Lichtstrahl, vorzugsweise IR-Strahl, durch die in dem Gefäß (100) enthaltene Flüssigkeit strahlbar ist, und daß ein für alle Höhenniveaus gemeinsamer oder für jedes Höhenniveau ein eigener elektrooptischer Wandler ($D_1$ bis $D_n$) vorgesehen ist, der ein der empfangenen Lichtstärke entsprechendes elektrisches Meßwertsignal erzeugt.

**38.** Vorrichtung nach einem der Ansprüche 20 bis 25, **dadurch gekennzeichnet,** daß eine IR-Lichtquelle (110), vorzugsweise eine Laserdiode, und eine Spiegelanordnung (112) oder eine Lichtleittechnik vorgesehen sind, mit deren Hilfe der IR-Lichtstrahl (121) aufeinanderfolgend auf verschiedenen Höhenniveaus ($h_1$ bis $h_n$) durch die in dem Gefäß enthaltene Flüssigkeit strahlbar ist, und daß ein für alle Höhenniveaus ($h_1$ bis $h_n$) gemeinsamer oder für jedes Höhenniveau ein eigener elektrooptischer Wandler ($D_1$ bis $D_n$) vorgesehen ist, der ein der empfangenen Lichtstärke entsprechendes elektrisches Meßwertsignal erzeugt.

**39.** Vorrichtung nach einem der Ansprüche 20 bis 27, **gekennzeichnet durch** an dem Gefäß (130) in den verschiedenen Höhenniveaus (m) angeordnete PTC-Temperatursensoren (131), durch Konstantstromquellen (132), die den PTC-Temperatursensoren jeweils eine konstante Heizleistung zuführen, und durch Widerstandsmeßkreise (MP), die den der Temperatur eines PTC-Temperatursensors entsprechenden Widerstandswert als Meßwert bestimmen.

**Claims**

**1.** Process for carrying out measurements on foaming liquids mixed with gas, in which a measured value ($I_m$) determined by a liquid parameter governed by the gas content is measured at each of several different levels (m) of the foaming liquid contained in a vessel, characterized in that, in order to measure the density of the foaming liquid as a function of height, a reference measured value ($I_0$) of the same parameter is measured at the various levels (m) over a reference measurement path containing essentially gas-free liquid of the foaming liquid to be measured, in that, depending on whether a corresponding measured value ($I_L$) measured in air is greater or smaller than the reference measured value ($I_0$) obtained over the reference measurement path, for each level a ratio ($c'_m$) is derived corresponding to the proportion of the reference measured value ($I_0$) to the measured value ($I_m$) at that level or to the reciprocal of this proportion, so that the ratio ($c'_m$) is equal to unity for gas-free liquid and is essentially equal to zero for air, and in that each ratio ($c'_m$) is multiplied by the value of the density ($\rho$) of the gas-free liquid.

**2.** Process for carrying out measurements on foaming liquids mixed with gas, in particular for measuring milk mixed with air, in which a measured value ($I_m$) determined by a liquid parameter governed by the gas content is measured at each of several different levels (m) of the foaming liquid contained in a vessel, characterized in that a reference measured value ($I_0$) of the same parameter is measured at the various levels (m) over a reference measurement path containing essentially gas-free liquid of the foaming liquid to be measured, in that, depending on whether a corresponding measured value ($I_L$) measured in air is greater or smaller than the reference measured value ($I_0$) obtained over the

reference measurement path, for each level a ratio ($c'_m$) is derived corresponding to the proportion of the reference measured value ($I_0$) to the measured value ($I_m$) at that level or to the reciprocal of this proportion, so that the ratio ($c'_m$) is equal to unity for gas-free liquid and is essentially equal to zero for air, in that the volume ($V_m$) contained between a given level and the next level below, or as the case may be the bottom of the vessel, is determined in each case, in that the product ($c'_m \times \rho \times V_m$) is obtained in each case by multiplying together the volume ($V_m$) lying below a given level, the ratio ($c'_m$) determined for that level and the density of the milk ($\rho$), and in that in order to determine the total mass (G) of liquid the sum of all the products thus obtained over all levels (n) is derived thus:

$$G = \sum_{m=1}^{n} c'_m \times V_m \times \rho .$$

3. Process according to Claim 2 for measuring a mass of milk, in which the milk mass is determined on a batched basis by letting milk run continuously into a measuring vessel and interrupting the supply of milk when a predetermined measured value is attained, and then letting the milk run out completely or until a second predetermined measured value is reached, before repeating the operation, characterized in that the milk mass is continuously determined during the influx of milk into the measuring vessel, and the supply of milk is interrupted when a predetermined first mass of milk is attained, in that the mass of milk in the milk vessel is continuously determined during the outflow of the milk, in that the discharge of the milk is interrupted when a predetermined second mass of milk is reached, in that the difference between the first and second masses of milk is derived to determine the mass of milk per batch, in that the operation is repeated until the end of milk flow in a milking cycle, in that the milk mass is calculated according to the number of batches, and in that the mass of milk accumulated in the measuring vessel at the end of the milking cycle is determined and is added to the milk mass already calculated.

4. Process according to Claim 3, characterized in that the milk is discharged after a predetermined first mass of milk has been attained in the measuring vessel, in that any milk mass remaining in the foam at the end is determined and in that to determine the milk mass per batch the difference is obtained between the first predetermined milk mass and the residual milk mass in the foam .

5. Process according to Claim 2, characterized in that the milk produced in a milk cycle is fed into a measuring vessel, in that at predetermined time intervals the supply of milk is interrupted and the mass of milk present in the measuring vessel at that moment is determined, in that this milk mass is tapped from the milk vessel as one batch, before the inlet to the milk vessel is reopened, and in that the milk masses measured in the individual batches until the end of the milk flow are added up.

6. Process according to Claim 2, characterized in that the milk produced in a milking cycle is fed into a measuring vessel, in that the milk is tapped from the measuring vessel as a batch when a predetermined mass of milk is attained or at predetermined time intervals, and in that the milk masses measured in the individual batches until the end of the milk flow are added up.

7. Process for carrying out measurements on foaming liquids mixed with gas, particularly measurements on milk mixed with air, in which a measured value ($I_m$) determined by a liquid parameter governed by the gas content is measured at each of several different levels (m) of the foaming liquid contained in a vessel, characterized in that a reference measured value ($I_0$) of the same parameter is measured at the various levels (m) over a reference measurement path containing essentially gas-free liquid of the foaming liquid to be measured, in that, depending on whether a corresponding measured value ($I_L$) measured in air is greater or smaller than the reference measured value ($I_0$) obtained over the reference measurement path, for each level a ratio ($c'_m$) is derived corresponding to the proportion of the reference measured value ($I_0$) to the measured value ($I_m$) at that level or to the reciprocal of this proportion, so that the ratio ($c'_m$) is equal to unity for gas-free liquid and is essentially equal to zero for air, in that liquid is supplied to the vessel, in that liquid is continuously tapped through a calibrated orifice, in that the mass of liquid lying above the level of the calibrated orifice is measured by determining in each case the volume ($V_m$) contained between a given level and the next level below, or as the case may be the bottom of the vessel, in that the product ($c'_m \times \rho \times V_m$) is obtained in each case by multiplying together the volume ($V_m$) lying below a given level, the ratio ($c'_m$) determined for that level and the density of the milk ($\rho$), and in that the total mass (G) of liquid lying above the level of the calibrated orifice is derived as the sum of all the products thus obtained for the levels (n) lying above the calibrated orifice, in accordance with the formula

$$G = \sum_{m=1}^{n} c'_m \times V_m \times \rho$$

and in that the flow of liquid discharged through the calibrated orifice is calculated from the measured mass (G) of liquid above the level of the calibrated orifice and the resulting hydrostatic pressure.

8. Process according to any one of Claims 1 to 7, characterized in that the levels are provided at equal height intervals.

9. Process for carrying out measurements on foaming liquids mixed with gas, in particular on milk mixed with air, in which a measured value ($I_m$) determined by a liquid parameter governed by the gas content is measured at each of several different levels (m) of the foaming liquid contained in a vessel, characterized in that a reference measured value ($I_0$) of the same parameter is measured in the foaming liquid at the various levels (m) over a reference measurement path containing essentially gas-free liquid of the foaming liquid to be measured, in that, depending on whether a corresponding measured value ($I_L$) measured in air is greater or smaller than the reference measured value ($I_0$) obtained over the reference measurement path, for each level a ratio ($c'_m$) is derived corresponding to the proportion of the reference measured value ($I_0$) to the measured value ($I_m$) at that level or to the reciprocal of this proportion, so that the ratio ($c'_m$) is equal to unity for gas-free liquid and is essentially equal to zero for air, in that the levels have equal spacing (d), in that liquid is supplied to the vessel, in that liquid is continuously discharged from the vessel through an essentially vertical slit, and in that the mass of liquid flowing through the measuring slit per unit of time is determined from the equation

$$\dot{m}_{eff} = \left( K \sum_{m=1}^{n} \sqrt{c'_m \sum_{i=m}^{n} c'_i} \right) \left( 1 - a \sqrt{K \sum_{m=1}^{n} \sqrt{c'_m \sum_{i=m}^{n} c'_i}} \right),$$

where:

$\dot{m}_{eff}$ [g/sec] = total mass flow escaping from the slit

$K = d \times s \times \rho \sqrt{2gd}$

d [cm] = level spacing

g [cm/sec$^2$] = 981 cm/sec$^2$

s [cm] = width of slit

$\rho$ [g/cm$^3$] = density of liquid

n = total number of levels

$c'_m$ = ratio (between 1 and 0) at level m

a = constant of the measuring device, a function of width of slit, edge of slit, etc.; is obtained by calibration.

10. Process according to Claim 1, 2, 7 or 9, characterized in that a corrected ratio is derived from the ratio ($c'_m$) by suitable prior calibration.

11. Process according to Claim 9 or 10, characterized in that the milk flow is measured at constant time intervals during a milking cycle and in that in order to determine the total quantity of milk produced the

EP 0 315 201 B1

individual products obtained by multiplying the milk flow value by the time between successive measurements are summed.

12. Process according to any one of Claims 1 to 11, characterized in that the reference measured value is measured at or immediately above the bottom of the vessel.

13. Process according to any one of Claims 1 to 11, characterized in that the measurement path located at the first level above the bottom of the vessel also serves as reference measurement path.

14. Process according to any one of Claims 1 to 13, characterized in that measurements of electrical resistance or electric conductance are performed as the parameter to be measured at each level.

15. Process according to any one of Claims 1 to 13, characterized in that measurements of light transmission or absorption of infrared radiation are performed as the parameter to be measured at each level.

16. Process according to any one of Claims 1 to 13, characterized in that measurements of heat conduction are performed as the parameter to be measured at each level.

17. Process according to any one of Claims 1 to 16, characterized in that for calibration purposes all measured ratios ($c'_m$) are exponentiated with one and the same exponent, greater than 0, to yield corrected ratios.

18. Process according to any one of Claims 1 to 17, characterized in that, in order to avoid errors due to different ratios on individual measurement paths, readings are taken with the same calibration liquid for all measurement paths, in that an average value is obtained from the readings taken, and in that the measured value for each measurement path is weighted by a correction factor calculated from its deviation from the average value.

19. Process according to any one of Claims 1 to 18, characterized in that the sensing of the individual measured values at all levels occurs in a time of less than 1 second, preferably less than 0.5 second, and preferredly in a time of 0.1 second.

20. Apparatus for carrying out measurements on foaming liquids mixed with gas, in particular on milk/air mixtures, with a vessel (1) and at least one measuring device ($E_0$ to $E_n$) with which a measured value ($I_m$) determined by a gas-dependent parameter of the liquid contained in the vessel can be measured at each of several different levels (m) of the vessel, characterized in that, in order to measure the relative density of the foaming liquid as a function of height, a reference measurement path ($E_0$, $E_1$) containing essentially gas-free liquid of the foaming liquid to be measured is provided at the various levels, in that a device (MP) is provided which, depending on whether a corresponding measured value ($I_L$) measured in air is greater or smaller than the reference measured value ($I_0$) obtained over the reference measurement path, derives for each level a ratio ($c'_m$) corresponding to the proportion of the reference measured value to the measured value at that level or to the reciprocal of this proportion, so that the ratio ($c'_m$) is equal to unity for gas-free liquid and is essentially equal to zero for air, and in that a multiplication unit is provided which multiplies each ratio ($c'_m$) by the value of the density ($\rho$) of the gas-free liquid.

21. Apparatus for carrying out measurements on foaming liquids mixed with gas, in particular on milk/air mixtures, with a vessel (1) and at least one measuring device ($E_0$ to $E_n$) with which a measured value ($I_m$) determined by a gas content dependent parameter of the liquid contained in the vessel can be measured at each of several different levels (m) of the vessel (1, 100, 130), characterized in that a reference measurement path ($E_0$, $E_1$) containing essentially gas-free liquid of the foaming liquid to be measured is provided at the various levels, in that a device (MP) is provided which, depending on whether a corresponding measured value ($I_L$) measured in air is greater or smaller than the reference measured value ($I_0$) obtained over the reference measurement path, derives for each level a ratio ($c'_m$) corresponding to the proportion of the reference measured value to the measured value at that level or to the reciprocal of this proportion, so that the ratio ($c'_m$) is equal to unity for gas-free liquid and is essentially equal to zero for air, and in that a multiplication unit is provided which multiplies each ratio

31

(c'$_m$) by the value of the density ($\rho$) of the gas-free liquid and by the volume (V$_m$) included between that level and the level immediately below it within the vessel, to give the product (c'$_m$ x V$_m$ x $\rho$), and in that an adder device (MP) is provided for adding the products obtained for all levels (n) to give the total mass (G) of liquid, thus:

$$G = \sum_{m=1}^{n} c'_m \times V_m \times \rho.$$

**22.** Apparatus according to Claim 21, characterized in that the measuring device is provided on a measuring chamber of a batch measuring device.

**23.** Apparatus for carrying out measurements on foaming liquids mixed with gas, in particular on milk/air mixtures, with a vessel (1, 100, 130) and at least one measuring device (E$_0$ to E$_n$) with which a measured value (I$_m$) determined by a gas content dependent parameter of the liquid contained in the vessel can be measured at each of several different levels (m) of the vessel, characterized in that a reference measurement path (E$_0$ to E$_1$) containing essentially gas-free liquid of the foaming liquid to be measured is provided at the various levels, which all have equal spacing (d), in that a device is provided which, depending on whether a corresponding measured value (I$_L$) measured in air is greater or smaller than the reference measured value (I$_0$) obtained over the reference measurement path, derives for each level a ratio (c'$_m$) corresponding to the proportion of the reference measured value to the measured value at that level or to the reciprocal of this proportion, so that the ratio (c'$_m$) is equal to unity for gas-free liquid and is essentially equal to zero for air, in that the liquid is supplied to the vessel and liquid is continuously discharged through an essentially vertical slit, and measured values of the ratio (c'$_m$) at the various levels (m) are determined with respect to the slit, and in that a computing element (MP) is provided which determines the value of liquid flow from the equation

$$\dot{m}_{eff} = \left( K \sum_{m=1}^{n} \sqrt{c'_m \sum_{i=m}^{n} c'_i} \right) \left( 1 - a \sqrt{K \sum_{m=1}^{n} \sqrt{c'_m \sum_{i=m}^{n} c'_i}} \right),$$

where:

$\dot{m}_{eff}$ [g/sec] = total mass flow escaping from the slit

$K = d \times s \times \rho \sqrt{2gd}$

$d$ [cm] = level spacing

$g$ [cm/sec$^2$] = 981 cm/sec$^2$

$s$ [cm] = width of slit

$\rho$ [g/cm$^3$] = density of liquid

$n$ = total number of levels

$c'_m$ = ratio (between 1 and 0) at level m

$a$ = constant of the measuring device, a function of width of slit, edge of slit, etc.; is obtained by calibration.

**24.** Apparatus according to any one of Claims 20, 21 or 23, characterized in that the reference measurement path is installed at or immediately above the bottom of the vessel.

**25.** Apparatus according to any one of Claims 20 to 23, characterized in that the reference measurement path is arranged at the level immediately above the bottom of the vessel, and in that the measured value at that level serves as reference measured value.

**26.** Apparatus according to any one of Claims 20 to 25, characterized in that the vessel (1, 100, 130) consists of a cylindrical vessel.

**27.** Apparatus according to any one of Claims 20 to 26, characterized in that the levels (m) are provided at equal height intervals (d).

**28.** Apparatus according to any one of Claims 20 to 27, characterized in that an electrode ($E_1$ to $E_n$) is arranged at each level on the vessel (1) and in that a common counter-electrode ($E_0$) is provided or a counterelectrode is provided opposite each electrode.

**29.** Apparatus according to Claim 28, characterized in that the system is designed to determine the electric conductance or electrical resistance over the measurement path.

**30.** Apparatus according to Claim 28 or 29, characterized in that an a.c. voltage is applied to the measurement path.

**31.** Apparatus according to Claim 30, characterized in that a sine-wave or delta a.c. voltage can be applied.

**32.** Apparatus according to any one of Claims 28 to 31, characterrzed in that a decoupling capacitor (6) is connected to prevent a d.c. component between the voltage source (4) and the common counterelectrode ($E_0$) or the counterelectrodes.

**33.** Apparatus according to any one of Claims 30 to 32, characterized in that the measuring device is operable with a measuring frequency between 200 Hz and 80 kHz and preferably with a frequency of 2 kHz.

**34.** Apparatus according to any one of Claims 28 to 33, characterized in that the electrodes ($E_1$ to $E_n$) are essentially round, with a diameter of about 0.5 to 1.2 mm and preferably 0.8 mm.

**35.** Apparatus according to any one of Claims 28 to 34, characterized in that the electrodes ($E_1$ to $E_n$) are arranged at height intervals of 1 to 8 mm, preferably 1.5 mm.

**36.** Apparatus according to any one of Claims 28 to 35, characterized in that the distance between the electrodes ($E_1$ to $E_n$) and the counterelectrode ($E_0$) is between 2 and 150 mm, and preferably about 4 mm.

**37.** Apparatus according to any one of Claims 20 to 27, characterized in that at each level a light source ($L_1$ to $L_n$), preferably consisting of LEDs, is provided, by means of which a light beam, preferably an infrared beam, can be projected through the liquid contained in the vessel (100), and in that an electrooptical transducer common to all levels or a separate electrooptical transducer ($D_1$ to $D_n$) for each level is provided, which generates an electrical signal corresponding to the light intensity received.

**38.** Apparatus according to any one of Claims 20 to 25, characterized in that an infrared light source (110), preferably a laser diode, and a mirror arrangement (112) or optical guide system are provided by means of which the infrared light beam (121) can be projected through the liquid contained in the vessel at different levels ($h_1$ to $h_n$) in succession, and in that an electrooptical transducer common to all levels ($h_1$ to $h_n$) or a separate electrooptical transducer ($D_1$ to $D_n$) for each level is provided, which generates an electrical signal corresponding to the light intensity received.

**39.** Apparatus according to any one of Claims 20 to 27, characterized by PTC Sensors (131) arranged on the vessel (130) at the various levels (m), by constant-current sources (132) supplying a constant heating power to each of the PTC sensors, and by resistance measuring circuits (MP) which determine as a measured value the resistance value corresponding to the temperature of a PTC sensor.

**Revendications**

**1.** Procédé pour réaliser des mesures dans des liquides moussants additionnés de gaz, dans lequel on mesure dans le liquide moussant contenu par un récipient, à plusieurs niveaux en hauteur (m) différents, une valeur mesurée respective ($I_m$) déterminée par un paramètre du liquide dépendant de la part de gaz renfermée, caractérisé par le fait que, pour mesurer la densité spécifique du liquide moussant en fonction de la hauteur, une valeur mesurée de référence ($I_O$) du même paramètre est mesurée aux différents niveaux en hauteur (m), sur un trajet de mesure de référence renfermant, pour l'essentiel, du liquide dégazé faisant partie du liquide moussant à mesurer ; que, selon qu'une valeur mesurée correspondante ($I_L$), mesurée dans l'air, est plus grande ou plus petite que la valeur mesurée de référence ($I_O$) obtenue sur le trajet de mesure de référence, on forme, pour chaque niveau en hauteur, un nombre proportionnel ($c'_m$) correspondant au rapport entre la valeur de mesure de référence ($I_O$) et la valeur mesurée ($I_m$) à ce niveau en hauteur, ou à la valeur réciproque de ce rapport, de sorte que le nombre proportionnel ($c'_m$) est égal à 1 pour du liquide dégazé, et pour l'essentiel égal à zéro pour de l'air ; et que chaque nombre proportionnel ($c'_m$) est multiplié par la valeur se rapportant à la densité spécifique ($\rho$) du liquide dégazé.

2. Procédé pour réaliser des mesures dans des liquides moussants additionnés de gaz, en particulier pour effectuer un mesurage dans du lait additionné d'air, dans lequel on mesure dans le liquide moussant contenu par un récipient, à plusieurs niveaux en hauteur (m) différents, une valeur mesurée respective ($I_m$) déterminée par un paramètre du liquide dépendant de la part de gaz renfermée, caractérisé par le fait qu'une valeur mesurée de référence ($I_O$) du même paramètre est mesurée aux différents niveaux en hauteur (m), sur un trajet de mesure de référence renfermant, pour l'essentiel, du liquide dégazé faisant partie du liquide moussant à mesurer ; que, selon qu'une valeur mesurée correspondante ($I_L$), mesurée dans l'air, est plus grande ou plus petite que la valeur mesurée de référence ($I_O$) obtenue sur le trajet de mesure de référence, on forme, pour chaque niveau en hauteur, un nombre proportionnel ($c'_m$) correspondant au rapport entre la valeur de mesure de référence ($I_O$) et la valeur mesurée ($I_m$) à ce niveau en hauteur, ou à la valeur réciproque de ce rapport, de sorte que le nombre proportionnel ($c'_m$) est égal à 1 pour du liquide dégazé, et pour l'essentiel égal à zéro pour de l'air ; qu'on détermine le volume ($V_m$) respectivement situé entre un niveau en hauteur et le niveau en hauteur immédiatement inférieur, respectivement le fond du récipient ; qu'on forme respectivement le produit ($c'_m \times \rho \times V_m$) du volume ($V_m$) situé au-dessous d'un niveau en hauteur, du nombre proportionnel ($c'_m$) déterminé pour ce niveau en hauteur, et de la densité spécifique ($\rho$) du lait ; et que, pour déterminer la masse totale (G) du liquide, la somme de tous les produits ainsi formés, se rapportant à tous les niveaux en hauteur (n), est formée pour correspondre à

$$G = \sum_{m=1}^{n} c'_m \times V_m \times \rho .$$

3. Procédé selon la revendication 2, pour mesurer une masse de lait, dans lequel la masse de lait est déterminée par lots du fait que du lait est mis en circulation continue dans un récipient mesureur, puis l'amenée du lait est interrompue lorsqu'une valeur mesurée prédéterminée est atteinte, après quoi le lait est évacué en totalité, ou jusqu'à ce que soit atteinte une seconde valeur mesurée prédéterminée, avant que le processus soit répété, caractérisé par le fait que la masse de lait est déterminée continument durant l'arrivée du lait dans le récipient mesureur, et l'afflux du lait est interrompu lorsqu'est atteinte une première masse de lait préétablie ; que la masse de lait est déterminée continûment, dans le récipient à lait, durant l'écoulement sortant du lait ; que le flux de sortie du lait est interrompu lorsqu'est atteinte une seconde masse de lait préétablie ; que la différence, entre les première et seconde masses de lait, est formée pour déterminer la masse de lait pour chaque lot ; que le processus est répété en un cycle de traite, jusqu'à l'achèvement de l'écoulement du lait ; que la masse de lait est calculée en concordance avec le nombre des lots ; et que la masse de lait accumulée dans le récipient mesureur à l'achèvement du cycle de traite est déterminée, puis ajoutée à la masse de lait déjà calculée.

4. Procédé selon la revendication 3, caractérisé par le fait que le lait est évacué après qu'une première masse de lait préétablie a été atteinte dans le récipient mesureur ; que la masse de lait éventuellement demeurée dans la mousse est déterminée au stade définitif ; et que, en vue de la détermination de la masse de lait pour chaque lot, on forme la différence entre la première masse de lait préétablie et la masse de lait résiduelle dans la mousse.

5. Procédé selon la revendication 2, caractérisé par le fait que le lait, recueilli en un cycle de lait, est dirigé dans un récipient mesureur ; que l'amenée du lait est interrompue à intervalles de temps prédéterminés, et l'on détermine la masse de lait présente dans le récipient mesureur à cet instant ; que cette masse de lait est évacuée du récipient à lait, sous la forme d'un Lot, avant que l'arrivée dans ledit récipient à lait soit de nouveau ouverte ; et que les masses de lait, mesurées dans les lots individuels, sont totalisées jusqu'à la fin de l'écoulement du lait.

6. Procédé selon la revendication 2, caractérisé par le fait que le lait, recueilli en un cycle de traite, est dirigé dans un récipient mesureur ; que le lait est déversé du récipient mesureur sous la forme d'un lot, lorsqu'une masse de lait prédéterminée est atteinte ou à des intervalles de temps prédéterminés ; et que les masses de lait, mesurées dans les lots individuels, sont totalisées jusqu'à la fin de l'écoulement du lait.

7. Procédé pour réaliser des mesures dans des liquides moussants additionnés de gaz, en particulier des mesures dans du lait additionné d'air, dans lequel on mesure dans le liquide moussant contenu par un récipient, à plusieurs niveaux en hauteur (m) différents, une valeur mesurée respective ($I_m$) déterminée par un paramètre du liquide dépendant de la part de gaz renfermée, caractérisé par le fait qu'une valeur mesurée de référence ($I_O$) du même paramètre est mesurée aux différents niveaux en hauteur (m), sur un trajet de mesure de référence renfermant, pour l'essentiel, du liquide dégazé faisant partie du liquide moussant à mesurer ; que, selon qu'une valeur mesurée correspondante ($I_L$), mesurée dans l'air, est plus grande ou plus petite que la valeur mesurée de référence ($I_O$) obtenue sur le trajet de mesure de référence, on forme, pour chaque niveau en hauteur, un nombre proportionnel ($c'_m$) correspondant au rapport entre la valeur de mesure de référence ($I_O$) et la valeur mesurée ($I_m$) à ce niveau en hauteur, ou à la valeur réciproque de ce rapport, de sorte que le nombre proportionnel ($c'_m$) est égal à 1 pour du liquide dégazé, et pour l'essentiel égal à zéro pour de l'air ; que du liquide est délivré au récipient ; que du liquide s'écoule continument par l'intermédiaire d'un orifice calibré ; que la masse de liquide, située au-dessus du niveau en hauteur de l'orifice calibré, est mesurée en déterminant le volume ($V_m$) respectivement situé entre un niveau en hauteur et le niveau en hauteur immédiatement inférieur, respectivement le fond du récipient ; qu'on forme respectivement le produit ($c'_m \times \rho \times V_m$) du volume ($V_m$) situé au-dessous d'un niveau en hauteur, du nombre proportionnel ($c'_m$) déterminé pour ce niveau en hauteur, et de la densité spécifique ($\rho$) du lait ; que la masse totale (G) du liquide, située au-dessus du niveau en hauteur de l'orifice calibré, est formée en représentant la somme de tous les produits ainsi formés, se rapportant aux niveaux en hauteur (n) situés au-dessus de l'orifice calibré, pour correspondre à

$$G = \sum_{m=1}^{n} c'_m \times V_m \times \rho \ ;$$

et que, sur la base de la masse de liquide (G) mesurée au-dessus du niveau en hauteur de l'orifice calibré, ainsi que de la pression hydrostatique qui en résulte, l'on calcule le flux de liquide s'écoulant par l'intermédiaire de l'orifice calibré.

8. Procédé selon l'une des revendications 1 à 7, caractérisé par le fait que les niveaux en hauteur sont prévus à des espacements mutuels identiques dans le sens de la hauteur.

9. Procédé pour réaliser des mesures dans des liquides moussants additionnés de gaz, en particulier dans du lait additionné d'air, dans lequel on mesure dans le liquide moussant contenu par un récipient, à plusieurs niveaux en hauteur (m) différents, une valeur mesurée respective ($I_m$) déterminée par un paramètre du liquide dépendant de la part de gaz renfermée, caractérisé par le fait qu'une valeur mesurée de référence ($I_O$) du même paramètre est mesurée dans le liquide moussant, aux différents niveaux en hauteur (m), sur un trajet de mesure de référence renfermant, pour l'essentiel, du liquide dégazé faisant partie du liquide moussant à mesurer ; que, selon qu'une valeur mesurée correspondante ($I_L$), mesurée dans l'air, est plus grande ou plus petite que la valeur mesurée de référence ($I_O$)

obtenue sur le trajet de mesure de référence, on forme, pour chaque niveau en hauteur, un nombre proportionnel ($c'_m$) correspondant au rapport entre la valeur de mesure de référence ($I_O$) et la valeur mesurée ($I_m$) à ce niveau en hauteur, ou à la valeur réciproque de ce rapport, de sorte que le nombre proportionnel ($c'_m$) est égal à 1 pour du liquide dégazé, et pour l'essentiel égal à zéro pour de l'air ; que les niveaux en hauteur ont respectivement un espacement mutuel identique (d) ; que du liquide est délivré au récipient ; que du liquide s'écoule continument du récipient, par l'intermédiaire d'une fente pour l'essentiel verticale ; et que la masse de liquide, s'écoulant par unité de temps à travers la fente de mesurage, est déterminée à partir de l'équation

$$\dot{m}_{eff} = \left[ K \cdot \sum_{m=1}^{n} \sqrt{c'_m \cdot \sum_{i=m}^{n} c'_i} \right] \left( 1 - a \sqrt{K \sum_{m=1}^{n} \sqrt{c'_m \sum_{i=m}^{n} c'_i}} \right),$$

comportant les significations suivantes :

$$\dot{m}_{eff} \left| \frac{g}{sec} \right| =$$

débit massique total sortant par la fente
$K = d \times s \times \rho \sqrt{2gd}$
$d$ [cm] = espacement entre les niveaux en hauteur

$$g \left[ \frac{cm}{sec^2} \right] = 981 \ \frac{cm}{sec^2}$$

$S$ [cm] = largeur de la fente

$$\rho \left[ \frac{g}{cm^3} \right] =$$

densité spécifique du liquide
$n$ = nombre total des niveaux en hauteur
$c'_m$ = nombre proportionnel entre 1 et 0 au niveau en hauteur $\underline{m}$
$a$ = constante du dispositif mesureur, établie par étalonnage et dépendant de la largeur de la fente, du bord de la fente, etc.

10. Procédé selon la revendication 1, 2, 7 ou 9, caractérisé par le fait qu'un nombre proportionnel corrigé est formé à partir du nombre proportionnel ($c'_m$), par un étalonnage préalable correspondant.

11. Procédé selon la revendication 9 ou 10, caractérisé par le fait que le flux de lait est mesuré à des intervalles de temps constants durant un cycle de traite ; et que, pour déterminer la quantité totale de lait recueillie par traite, on forme la somme des produits respectifs de la valeur du flux de lait et du temps séparant des mesurages successifs.

12. Procédé selon l'une des revendications 1 à 11, caractérisé par le fait que la valeur mesurée de référence est mesurée sur le fond du récipient, ou directement au-dessus de ce dernier.

36

**13.** Procédé selon l'une des revendications 1 à 11, caractérisé par le fait que le trajet de mesure, situé au premier niveau en hauteur au-dessus du fond du récipient, sert simultanément de trajet de mesure de référence.

**14.** Procédé selon l'une des revendications 1 à 13, caractérisé par le fait que des mesurages de la résistance électrique ou de la valeur de conduction électrique, représentant un paramètre à mesurer, sont effectués à chaque niveau en hauteur.

**15.** Procédé selon l'une des revendications 1 à 13, caractérisé par le fait que des mesurages de la translucidité ou de l'absorption du rayonnement infrarouge, représentant un paramètre à mesurer, sont effectués à chaque niveau en hauteur.

**16.** Procédé selon l'une des revendications 1 à 13, caractérisé par le fait que des mesurages de la conductivité thermique, représentant un paramètre à mesurer, sont effectués à chaque niveau en hauteur.

**17.** Procédé selon l'une des revendications 1 à 16, caractérisé par le fait que, en vue de l'étalonnage, tous les nombres proportionnels ($c'_m$) mesurés sont élevés à une puissance avec un seul et même exposant supérieur à 0, pour former des nombres proportionnels corrigés.

**18.** Procédé selon l'une des revendications 1 à 17, caractérisé par le fait que, afin d'éviter des erreurs occasionnées par des conditions différentes régnant sur les trajets de mesure individuels, des mesurages sont effectués avec un liquide d'étalonnage identique pour tous les trajets de mesure ; qu'une valeur moyenne est formée à partir des valeurs mesurées obtenues ; et que la valeur mesurée de chaque trajet de mesure est pondérée par un facteur de correction calculé en fonction de l'écart entre sa valeur mesurée et la valeur moyenne.

**19.** Procédé selon l'une des revendications 1 à 18, caractérisé par le fait que l'exploration des valeurs mesurées a respectivement lieu, à tous les niveaux en hauteur, en un laps de temps inférieur à 1 seconde, de préférence inférieur à 0,5 seconde, et préférentiellement en un laps de temps de 0,1 seconde.

**20.** Dispositif pour réaliser des mesures dans des liquides moussants additionnés de gaz, notamment dans des mélanges lait-air, comprenant un récipient (1) ainsi qu'au moins un dispositif mesureur ($E_O$ à $E_n$) à l'aide duquel ou, respectivement, desquels il est possible de mesurer, à plusieurs niveaux en hauteur différents (m) du récipient, une valeur mesurée respective ($I_m$) déterminée par un paramètre du liquide contenu par le récipient, lequel paramètre est dépendant du gaz, caractérisé par le fait que, pour mesurer la densité spécifique du liquide moussant en fonction de la hauteur, aux différents niveaux en hauteur, il est prévu un trajet de mesure de référence ($E_O$, $E_1$) renfermant, pour l'essentiel, du liquide dégazé faisant partie du liquide moussant à mesurer ; qu'il est prévu un dispositif (MP) qui forme pour chaque niveau en hauteur, selon qu'une valeur mesurée correspondante ($I_L$), mesurée dans l'air, est plus grande ou plus petite que la valeur mesurée de référence ($I_O$) obtenue sur le trajet de mesure de référence, un nombre proportionnel ($c'_m$) correspondant au rapport entre la valeur de mesure de référence et la valeur mesurée à ce niveau en hauteur, ou à la valeur réciproque de ce rapport, de sorte que le nombre proportionnel ($c'_m$) est égal à 1 pour du liquide dégazé, et pour l'essentiel égal à zéro pour de l'air ; et qu'il est prévu un terme multiplicateur, avec lequel chaque nombre proportionnel ($c'_m$) est multiplié par la valeur se rapportant à la densité spécifique ($\rho$) du liquide dégazé.

**21.** Dispositif pour réaliser des mesures dans des liquides moussants additionnés de gaz, notamment dans des mélanges lait-air, comprenant un récipient (1) ainsi qu'au moins un dispositif mesureur ($E_O$ à $E_n$) à l'aide duquel ou, respectivement, desquels il est possible de mesurer, à plusieurs niveaux en hauteur différents (m) du récipient (1, 100, 130), une valeur mesurée respective ($I_m$) déterminée par un paramètre du liquide contenu par le récipient, lequel paramètre est dépendant de la part de gaz renfermée, caractérisé par le fait qu'il est prévu, aux différents niveaux en hauteur, un trajet de mesure de référence ($E_O$, $E_1$) renfermant, pour l'essentiel, du liquide dégazé faisant partie du liquide moussant à mesurer ; qu'il est prévu un dispositif (MP) qui forme pour chaque niveau en hauteur, selon qu'une valeur mesurée correspondante ($I_L$), mesurée dans l'air, est plus grande ou plus petite que la valeur mesurée de référence ($I_O$) obtenue sur le trajet de mesure de référence, un nombre proportionnel ($c'_m$)

correspondant au rapport entre la valeur de mesure de référence et la valeur mesurée à ce niveau en hauteur, ou à la valeur réciproque de ce rapport, de sorte que le nombre proportionnel ($c'_m$) est égal à 1 pour du liquide dégazé, et pour l'essentiel égal à zéro pour de l'air ; qu'il est prévu un terme multiplicateur, avec lequel chaque nombre proportionnel ($c'_m$) est multiplié par la valeur se rapportant à la densité spécifique ($\rho$) du liquide dégazé, et par la grandeur du volume ($V_m$) compris, dans le récipient, entre ce niveau en hauteur et le niveau en hauteur sous-jacent, de façon à former le produit ($c'_m \times V_m \times \rho$) ; et qu'un dispositif addeur (MP) est prévu en vue d'additionner les produits formés pour tous les niveaux en hauteur (n), afin d'indiquer la masse totale (G) du liquide, exprimée par

$$G = \sum_{m=1}^{n} c'_m \times V_m \times \rho.$$

22. Dispositif selon la revendication 21, caractérisé par le fait que le dispositif mesureur est prévu sur un compartiment de mesure d'un dispositif mesureur effectuant des mesurages par lots.

23. Dispositif pour réaliser des mesures dans des liquides moussants additionnés de gaz, notamment dans des mélanges lait-air, comprenant un récipient (1, 100, 130) ainsi qu'au moins un dispositif mesureur ($E_O$ à $E_n$) à l'aide duquel ou, respectivement, desquels il est possible de mesurer, à plusieurs niveaux en hauteur différents (m) du récipient, une valeur mesurée respective ($I_m$) déterminée par un paramètre du liquide contenu par le récipient, lequel paramètre est dépendant de la part de gaz renfermée, caractérisé par le fait qu'il est prévu, aux différents niveaux en hauteur présentant respectivement un espacement mutuel identique (d), un trajet de mesure de référence ($E_O$ à $E_1$) renfermant, pour l'essentiel, du liquide dégazé faisant partie du liquide moussant à mesurer ; qu'il est prévu un dispositif (MP) qui forme pour chaque niveau en hauteur, selon qu'une valeur mesurée correspondante ($I_L$), mesurée dans l'air, est plus grande ou plus petite que la valeur mesurée de référence ($I_O$) obtenue sur le trajet de mesure de référence, un nombre proportionnel ($c'_m$) correspondant au rapport entre la valeur de mesure de référence et la valeur mesurée à ce niveau en hauteur, ou à la valeur réciproque de ce rapport, de sorte que le nombre proportionnel ($c'_m$) est égal à 1 pour du liquide dégazé, et pour l'essentiel égal à zéro pour de l'air ; que le liquide est délivré au récipient, du liquide s'écoule continûment par l'intermédiaire d'une fente pour l'essentiel verticale, et des valeurs mesurées du nombre proportionnel ($c'_m$) sont déterminées, aux différents niveaux en hauteur (m), par rapport à la fente ; et qu'il est prévu un dispositif calculateur (MP), qui détermine la grandeur du flux de liquide à partir de l'équation

$$\dot{m}_{eff} = \left[ K \cdot \sum_{m=1}^{n} \sqrt{c'_m \cdot \sum_{i=m}^{n} c'_i} \right] \left[ 1 - a \sqrt{K \sum_{m=1}^{n} \sqrt{c'_m \sum_{i=m}^{n} c'_i}} \right],$$

comportant les significations suivantes :

$$\dot{m}_{eff} \left[ \frac{g}{sec} \right] =$$

débit massique total sortant par la fente

$K = d \times s \times \rho \sqrt{2gd}$

$d$ [cm] = espacement entre les niveaux en hauteur

$$g \left[ \frac{cm}{sec^2} \right] = 981 \quad \frac{cm}{sec^2}$$

S [cm] = largeur de la fente

$$\rho \left[ \frac{g}{cm^3} \right] =$$

densité spécifique du liquide

n = nombre total des niveaux en hauteur

$c'_m$ = nombre proportionnel entre 1 et 0 au niveau en hauteur $\underline{m}$

a = constante du dispositif mesureur, établie par étalonnage et dépendant de la largeur de la fente, du bord de la fente, etc.

24. Dispositif selon l'une des revendications 20, 21 ou 23, caractérisé par le fait que le trajet de mesure de référence est agencé sur le fond du récipient, ou directement au-dessus de ce dernier.

25. Dispositif selon l'une des revendications 20 à 23, caractérisé par le fait que le trajet de mesure de référence se trouve au niveau en hauteur situé directement au-dessus du fond du récipient ; et que la valeur mesurée sert de valeur mesurée de référence à ce niveau en hauteur.

26. Dispositif selon l'une des revendications 20 à 25, caractérisé par le fait que le récipient (1, 100, 130) est constitué d'un récipient cylindrique.

27. Dispositif selon l'une des revendications 20 à 26, caractérisé par le fait que les niveaux en hauteur (m) ont des espacements identiques (d) dans le sens de la hauteur.

28. Dispositif selon l'une des revendications 20 à 27, caractérisé par le fait qu'une électrode ($E_1$ à $E_n$) est installée sur le récipient (1), à chaque niveau en hauteur ; et qu'il est prévu, respectivement, une électrode complémentaire commune ($E_0$) ou une électrode complémentaire située en vis-à-vis de chaque électrode.

29. Dispositif selon la revendication 28, caractérisé par le fait que l'appareil est conçu pour déterminer la valeur de conduction électrique ou la résistance électrique sur le trajet de mesure.

30. Dispositif selon l'une des revendications 28 ou 29, caractérisé par le fait qu'une tension alternative est appliquée au trajet de mesure.

31. Dispositif selon la revendication 30, caractérisé par le fait qu'une tension alternative sinusoïdale ou triangulaire peut être appliquée.

32. Dispositif selon l'une des revendications 28 à 31, caractérisé par le fait que, en vue d'empêcher une part de courant continu, un condensateur de découplage (6) est branché entre la source de tension (4) et l'électrode complémentaire commune ($E_0$), ou les électrodes complémentaires.

33. Dispositif selon l'une des revendications 30 à 32, caractérisé par le fait que le dispositif mesureur peut être utilisé avec une fréquence de mesurage comprise entre 200 Hz et 80 kHz et, de préférence, avec une fréquence de 2 kHz.

34. Dispositif selon l'une des revendications 28 à 33, caractérisé par le fait que les électrodes ($E_1$ à $E_n$) sont pour l'essentiel circulaires et présentent un diamètre d'environ 0,5 à 1,2 mm et, de préférence, de 0,8 mm.

**35.** Dispositif selon l'une des revendications 28 à 34, caractérisé par le fait que les électrodes ($E_1$ à $E_n$) sont placées à un espacement en hauteur de 1 à 8 mm, préférentiellement de 1,5 mm.

**36.** Dispositif selon l'une des revendications 28 à 35, caractérisé par le fait que l'espacement, entre les électrodes ($E_1$ à $E_n$) et l'électrode complémentaire ($E_O$), est compris entre 2 et 150 mm et avoisine, de préférence, 4 mm.

**37.** Dispositif selon l'une des revendications 20 à 27, caractérisé par la présence, à chaque niveau en hauteur, d'une source de lumière ($L_1$ à $L_n$), de préférence des diodes électroluminescentes à l'aide desquelles un rayon lumineux, de préférence un rayon infrarouge, peut être diffusé à travers le liquide contenu par le récipient (100) ; et par le fait qu'un convertisseur électro-optique ($D_1$ à $D_n$), prévu en commun pour tous les niveaux en hauteur ou propre à chaque niveau en hauteur, engendre un signal électrique de valeur mesurée correspondant à l'intensité lumineuse reçue.

**38.** Dispositif selon l'une des revendications 20 à 25, caractérisé par la présence d'une source de lumière infrarouge (110), préférentiellement une diode laser, et d'un système à miroir (112) ou d'un agencement technique de guidage de la lumière, à l'aide desquels le rayon de lumière infrarouge (121) peut être successivement diffusé, à des niveaux en hauteur ($h_1$ à $h_n$) différents, à travers le liquide contenu par le récipient ; et par le fait qu'un convertisseur électro-optique ($D_1$ à $D_n$), prévu en commun pour tous les niveaux en hauteur ($h_1$ à $h_n$) ou propre à chaque niveau en hauteur, engendre un signal électrique de valeur mesurée correspondant à l'intensité lumineuse reçue.

**39.** Dispositif selon l'une des revendications 20 à 27, caractérisé par des sondes thermométriques (131) à coefficient de température positif, installées sur le récipient (130) aux différents niveaux en hauteur (m) ; par des sources de courant constant (132) qui délivrent respectivement, aux sondes thermométriques à coefficient de température positif, une puissance de chauffage constante ; et par des circuits mesureurs résistifs (MP) qui déterminent, en tant que valeur mesurée, la valeur résistive correspondant à la température d'une sonde thermométrique à coefficient de température positif.

FIG.1

EP 0 315 201 B1

FIG. 2

FIG. 3

FIG. 4

FIG.5

FIG.6

FIG.7

FIG.8

EP 0 315 201 B1

FIG.9

EP 0 315 201 B1

FIG. 10

FIG. 11

FIG.12